# NEUE EUROPÄISCHE PATENTSCHRIFT

(11) **EP 3 656 619 B2**
(45) Veröffentlichungstag und Bekanntmachung des Hinweises auf die Entscheidung über den Einspruch: **03.09.2025**
(45) Hinweis auf die Patenterteilung: 02.11.2022
(21) Anmeldenummer: 19209334.2
(22) Anmeldetag: 15.11.2019
(51) Int. Cl.: B60T 7/20, B60D 1/24, B60D 1/44, B60D 1/62, B60T 13/08, B60T 8/24, B60T 8/32, B60T 8/17

(54) **ELEKTRISCHE ANTRIEBS- UND BREMSEINRICHTUNG**
ELECTRIC DRIVE AND BRAKING DEVICE
DISPOSITIF ÉLECTRIQUE D'ENTRAÎNEMENT ET DE FREINAGE

(30) Priorität: 19.11.2018 DE 202018106549 U
(43) Veröffentlichungstag der Anmeldung: 27.05.2020
(73) Patentinhaber: Alois Kober GmbH, 89359 Kötz (DE)
(72) Erfinder: Czeschner, Daniel Andre, 87727 Babenhausen (DE); Eckle, Volker, 89183 Holzkirch (DE); Hofhansl, Walter, 89359 Kötz (DE); Spiegler, Harald, 89312 Günzburg (DE); Stötter, Stephan, 86479 Aichen (DE); Hupfer, Fabian, 89257 Illertissen (DE)
(74) Vertreter: ERNICKE Patent- und Rechtsanwälte PartmbB

(56) Entgegenhaltungen:
- EP-A1- 1 598 249
- EP-A1- 3 388 297
- DE-A1- 102010 042 907
- DE-A1- 102014 009 746
- DE-U1- 202017 101 795
- US-A1- 2014 210 456

## Beschreibung

Die Erfindung betrifft eine elektrische Antriebs- und Bremseinrichtung für einen auflaufbremsbaren Fahrzeuganhänger, insbesondere Kraftfahrzeuganhänger, mit den Merkmalen im Oberbegriff des Hauptanspruchs.

Konventionelle auflaufgebremste Kraftfahrzeuganhänger mit einem Aufbau und einem hohen zulässigen Gesamtgewicht von 500 kg und mehr, insbesondere 1.300 kg und mehr, benötigen zum Ziehen ein ausreichend dimensioniertes Zugkraftfahrzeug mit genügend Antriebsleistung bzw. Antriebsenergie und Eigengewicht. Zugfahrzeuge in Form von Elektro- oder Hybridfahrzeugen mit einem elektrischen Antriebsmotor und einem elektrischen Energiespeicher können damit Probleme haben. Im Gespannbetrieb reduziert sich deren Reichweite signifikant, insbesondere bei Steigungs strecken.

Die EP 1 598 249 A1 befasst sich mit einer Schlingerbremse für auflaufgebremste Anhänger, welche Instabilitäten im Fahr- und Zugbetrieb, z.B. Schlinger- oder Wankbewegungen des Anhägers, durch eine eigenständige und die Auflaufbremse überlagernde Betätigung der Radbremsen beseitigt. Die Schlingerbremse weist eine Sensorik, eine Steuerung und einen steuerbaren motorischen Bremsaktuator zur eigenständigen Betätigung der Radbremsen auf. Die Schlingerbremse hat keine Antriebsfunktion für den gezogenen Anhänger.

Die DE 20 2017 101 795 U1 betrifft eine Weiterentwicklung der vorgenannten Schlingerbremse für auflaufgebremste Anhänger, wobei deren Bremskraft an das tatsächliche Anhängergewicht angepasst werden kann. Die Masse des Anhängers wird durch einen Messring an der Auflaufeinrichtung detektiert und der Steuerung der Schlingerbremse im Fahr- und Zugbetrieb mitgeteilt. Die Schlingerbremse bzw. Stabilisierungseinrichtung hat keine Antriebsfunktion für den gezogenen Anhänger.

Es ist Aufgabe der vorliegenden Erfindung, eine geeignete Antriebs- und Bremsunterstützung für Fahrzeuganhänger, insbesondere Kraftfahrzeuganhänger, mit Auflaufbremse zur Verfügung zu stellen.

Die Erfindung löst diese Aufgabe mit den selbstständigen Ansprüchen.

Die beanspruchte elektrische Antriebs- und Bremseinrichtung ist für einen Kraftfahrzeuganhänger und für den Betrieb mit einem Zugkraftfahrzeug besonders geeignet. Ein Zugkraftfahrzeug kann z.B. ein motorisierter PKW oder LKW, insbesondere Leichtlaswagen, mit vier oder mehr Rädern, sein. Ein Zugkraftfahrzeug kann aber auch als motorisiertes Zweirad, z.B. Motorrad oder Pedelec, als motorisiertes Dreirad oder dgl. ausgebildet sein.

Die beanspruchte elektrische Antriebs- und Bremseinrichtung kann auch für andere Arten von Fahrzeuganhängern und Zugfahrzeugen eingesetzt werden, z.B. Lastenanhänger für mit Muskelkraft angetriebene Treträder, insbesondere Fahrräder, Liegeräder oder dgl.. Solche Anhänger für den Transport von Gütern und/oder Personen werden auch als Tretradanhänger bezeichnet.

Die elektrische Antriebs- und Bremseinrichtung und der damit ausgerüstete Fahrzeuganhänger, insbesondere Kraftfahrzeuganhänger oder Tretradanhänger, haben verschiedene Vorteile. Nachfolgend wird hierzu auf Kraftfahrzeuganhänger Bezug genommen, wobei die genannten Ausgestaltungen und Vorteile auch für andere Arten von Fahrzeuganhängern gelten. Diese können von einem z.B. durch Muskelkraft oder auf andere Weise angetriebenen Zugfahrzeug bewegt werden.

Ferner kann der Fahrzeuganhänger, insbesondere Kraftfahrzeuganhänger, von einem entsprechend ausgebildeten Fahrzeug geschoben werden. Dies kann mittels Motorkraft, Muskelkraft oder einer anderen Antriebskraft geschehen. Unter ein Zugfahrzeug, insbesondere Zugkraftfahrzeug, werden daher auch schiebende Fahrzeuge, insbesondere Kraftfahrzeuge, subsumiert.

Die elektrische Antriebs- und Bremseinrichtung lässt sich an einem vorhandenen Kraftfahrzeuganhänger, nachrüsten oder umrüsten. Sie lässt sich andererseits auch bei der Erst-Herstellung eines Kraftfahrzeuganhängers, in diesen einbauen und integrieren. Der Kraftfahrzeuganhänger, kann mittels einer Auflaufbremse im Zug- und Gespannbetrieb gebremst werden. Hierdurch werden gesetzliche Vorgaben eingehalten und eine Erleichterung für die baurechtliche Zulassung des Kraftfahrzeuganhängers erreicht.

Die elektrische Antriebs- und Bremseinrichtung unterstützt und entlastet bei Vorwärtsfahrt im Zug- und Gespannbetrieb das Zugfahrzeug, insbesondere Zugkraftfahrzeug. Diese Entlastung tritt insbesondere beim negativen oder positiven Beschleunigen bzw. Bremsen und Anzugbeschleunigen des Gespanns ein. Sie kann auch bei anderen, z.B. beschleunigungsfreien, Zugfahrzuständen entstehen. Bei Rückwärtsfahrt kann die elektrische Antriebs- und Bremseinrichtung ebenfalls Unterstützung bieten oder neutralisiert werden.

Günstig wirkt sich die Unterstützung auch bei einem traktionsproblematischen Untergrund aus. Etwaige Traktionsschwächen beim Zugkraftfahrzeug, z.B. auf losem oder glatten Untergrund, können zumindest teilweise ausgeglichen werden. Auch Traktionsunterschiede zwischen linken und rechten Fahrzeugrädern können kompensiert werden. Die Gesamttraktion des Gespanns kann erhöht werden. Dies ist beim Bremsen und Anzugbeschleunigen des Gespanns und auch im anderen, insbesondere beschleunigungsfreien, Fahrbetrieb des Gespanns in Vorwärtsrichtung und ggf. Rückwärtsrichtung von Vorteil.

Insbesondere kann die elektrische Antriebs- und Bremseinrichtung Entlastung und Traktionsunterstützung am Hang bieten. Bei Aufwärtsfahrt kann z.B. ein frontgetriebenes Zugkraftfahrzeug beim Anfahren und auch während der Fahrt wirksam elektrisch treibend unterstützt und vom Anhängergewicht und dessen Hangabtriebskraft entlastet werden. Bei Abwärtsfahrt wird der Kraftfahrzeuganhänger eigenständig elektrisch gebremst und seine Hangabtriebskraft kompensiert. Zudem kann eine etwaige schwache Bremsleistung des Zugkraftfahrzeugs, z.B. auf glatter Fahrbahn, durch zusätzliche elektrische Bremsleistung des Kraftfahrzeuganhängers kompensiert werden.

Durch die Entlastung kann die anhängerseitig auf das Zugkraftfahrzeug einwirkende Zug- oder Schubkraft minimiert werden. Sie kann insbesondere auf "0" oder auf eine geringen Vorgabewert bzw. Offset reduziert werden.

Das eigenständige elektrische Antreiben und positive Beschleunigen des Kraftfahrzeuganhängers entlastet den Fahrantrieb des Zugkraftfahrzeugs. Das ist besonders für Zugkraftfahrzeuge mit Elektroantrieb (ggf. mit Range Extender) oder Hybridantrieb (Kombination von Elektro- und Verbrennungsmotor) von Vorteil. Die Reichweite solcher Fahrzeuge im Gespannbetrieb wird signifikant erhöht. Dies wirkt sich insbesondere auf bergigen Fahrstrecken und im Stop-and-Go-Verkehr positiv aus.

Das eigenständige elektrische Bremsen des Kraftfahrzeuganhängers spricht sehr schnell, sensibel und wirksam an. Es entlastet die Bremsanlage des Zugkraftfahrzeugs und die Betriebsbremse des Kraftfahrzeuganhängers. Durch die schnelle und modulierfähige elektrische Antriebs- und Bremswirkung kann auch auf kritische Fahrzustände mit einem Blockieren oder Durchrutschen der Fahrzeugräder schnell, wirksam und zielgerichtet reagiert und des Gespann restabilisiert werden.

Zudem kann beim elektrischen Bremsen eine Energierückgewinnung erreicht werden. Dies optimiert den elektrischen Energiehaushalt und erhöht die Verfügbarkeit der elektrischen Antriebsleistung auch auf langen und steigungsreichen Fahrstrecken. Die Energierückgewinnung bringt ebenfalls für Zugkraftfahrzeuge mit Elektro- oder Hybridantrieb besondere Vorteile. Zudem werden die Radbremsen des Kraftfahrzeuganhängers geschont.

Die elektrische Antriebs- und Bremseinrichtung kann außerdem zur Unterstützung des Zugkraftfahrzeugs und zur Reduzierung der Anhängelast im normalen und zumindest weitgehend beschleunigungsfreien Zug- und Gespannbetrieb benutzt werden. Durch die eigenständige elektrische Antriebskompensation von Fahr- und Reibungswiderständen und Massewirkungen, insbesondere Masseträgheiten, des Kraftfahrzeuganhängers wirkt auf das Zugkraftfahrzeug eine geringere Anhängelast ein, als bei einem konventionellen Kraftfahrzeuganhänger. Dadurch können große und schwere Kraftfahrzeuganhänger auch von schwächeren Zugkraftfahrzeugen gezogen werden, die für das Anhängergewicht eigentlich unterdimensioniert wären.

Die elektrische Antriebs- und Bremseinrichtung kann ferner Schlingerbewegungen des Kraftfahrzeuganhängers vermeiden oder beseitigen. Sie kann außerdem als Rangierantrieb eingesetzt werden.

Die beanspruchte elektrische Antriebs- und Bremseinrichtung weist eine Auflaufeinrichtung mit einer Kraftfahrzeuganhängekupplung, insbesondere einer Kugelkopfkupplung, und mit einem Auflaufbremsaktuator auf, mit dem eine Betriebsbremse des Kraftfahrzeuganhängers betätigt werden kann. Die Betriebsbremse ist dadurch autark. Sie braucht keine Steuersignale von einem Zugfahrzeug wie bei LKW-Anhängern. Anderseits behält die Auflauf- und Betriebsbremse des Kraftfahrzeuganhängers ihre Funktion und Verfügbarkeit.

Die elektrische Antriebs- und Bremseinrichtung und auch die Kraftfahrzeuganhängekupplung sind für eine Anhängergewicht von 500 kg, insbesondere 1.300 kg und mehr ausgelegt. Damit ausgerüstete auflaufbremsbare Kraftfahrzeuganhänger sind z.B. Wohnwagen oder Nutzanhänger, die z.B. von PKW oder Leichtlastwagen gezogen werden.

Die elektrische Antriebs- und Bremseinrichtung weist eine elektrische Antriebs- und Bremseinheit mit einer Steuerung zum elektrischen Antreiben und elektrischen Bremsen des Kraftfahrzeuganhängers auf. Die elektrische Antriebs- und Bremseinrichtung ist mit Fahrzeugrädern des Kraftfahrzeuganhängers treibend verbindbar oder verbunden. Sie weist ferner eine Erfassungseinrichtung auf, die physikalische Bewegungsparameter des Kraftfahrzeuganhängers im Zug- und Gespannbetrieb aufnimmt. Dies sind physikalische Bewegungsparameter, die insbesondere beim negativen oder positiven Beschleunigen des Kraftfahrzeuganhängers im Zug- oder Gespannbetrieb auftreten. Diese Beschleunigungen treten bei einem Auflaufen und Anzugbeschleunigen des Kraftfahrzeuganhängers auf.

Die physikalischen Parameter sind zumindest Weg und Kraft. Diese können sich bei den besagten positiven oder negativen Beschleunigungen ändern. Die besagten Beschleunigungen können auch direkt erfasst werden, insbesondere als Relativbeschleunigung zwischen Zugkraftfahrzeug und Kraftfahrzeuganhänger. Ein physikalischer Bewegungsparameter kann auch eine Abstandsänderung zwischen Zugkraftfahrzeug und Kraftfahrzeuganhänger sein.

Die Erfassungseinrichtung ist mit der Steuerung verbunden und übermittelt elektrische Signale an die Steuerung. Die Signalübermittlung kann leitungsgebunden mittels z.B. einer elektrischen Leitung oder drahtlos mittels z.B. eines Funksignals oder dergleichen erfolgen.

Die Steuerung steuert in Abhängigkeit von den Signalen der Erfassungseinrichtung die elektrische Antriebs- und Bremseinheit an und regelt deren Leistungsabgabe. Dies betrifft insbesondere die mechanische Leistungsabgabe bzw. das an die beaufschlagten Fahrzeugräder abgegebene elektrische Antriebs- oder Bremsmoment. Ferner kann bei einer elektrische Energierückgewinnung bzw. Rekuperation die elektrische Leistungsabgabe an den Energiespeicher gesteuert und ggf. geregelt werden. Die Leistungsabgabe kann über die Dauer des elektrischen Bremsens oder Antreibens und ggf. über die Höhe des elektrischen Brems- oder Antriebsmoments geregelt werden.

Die erfassten und signalisierten physikalischen Bewegungsparameter des Kraftfahrzeuganhängers können dabei die Führungsgröße für die besagte Regelung der Leistungsabgabe der elektrischen Antriebs- und Bremseinheit bilden.

Die elektrische Antriebs- und Bremseinrichtung kann außer der Auflaufeinrichtung, der elektrischen Antriebs- und Bremseinheit sowie der Steuerung und ggf. der Erfassungseinrichtung weitere Komponenten aufweisen. Eine solche zusätzliche Komponente kann z.B. eine Fahrzeugachse mit Fahrzeugrädern und Radbremsen sowie ggf. einem Bremskraftübertrager sein. Hierdurch wird eine Betriebsbremse gebildet und in die elektrische Antriebs- und Bremseinrichtung integriert. Ferner kann eine Feststellbremse, insbesondere eine Handbremse, dazu gehören. Eine besagte Fahrzeugachse kann auch mehrfach, z.B. in Doppel- und Dreifachausführung, vorhanden sein.

Die Erfassungseinrichtung ist in einem ersten Erfindungsaspekt an der Auflaufeinrichtung angeordnet. Die physikalischen Bewegungsparameter bewirken eine Reaktion der Auflaufeinrichtung und können dort in besonders günstiger Weise erfasst werden. Die Anordnung der Erfassungseinrichtung an der Auflaufeinrichtung ist außerdem für eine autarke Ausbildung der elektrischen Antriebs- und Bremseinrichtung von Vorteil. Zudem wird der Bau- und Montageaufwand niedrig gehalten.

Die Erfassungseinrichtung nimmt Weg und Kraft des positiv oder negativ beschleunigten Kraftfahrzeuganhängers im Zug- oder Gespannbetrieb auf. Daneben ist eine Erfassung, insbesondere Krafterfassung, auch bei anderen Fahrzuständen möglich.

Andere physikalische Bewegungsparameter, z.B. eine Abstandsänderung oder eine Relativbeschleunigung zwischen Zugkraftfahrzeug und Kraftfahrzeuganhänger können ebenfalls mit der an der Auflaufeinrichtung angeordneten Erfassungseinrichtung erfasst und an die besagte Steuerung signalisiert werden. Die Erfassung von einer Abstandsänderung, einer Relativbeschleunigung oder anderen physikalischen Bewegungsparametern kann zusätzlich zur Erfassung von Weg und Kraft erfolgen.

Mittels einer Detektionseinrichtung werden weitere physikalische Bewegungsparameter des Kraftfahrzeuganhängers im Zug- und Gespannbetrieb detektiert. Die Detektionseinrichtung ist mit der besagten Steuerung der elektrischen Antriebs- und Bremseinheit verbunden. Sie übermittelt ebenfalls elektrische Signale an die Steuerung. Die Steuerung kann auch in Abhängigkeit von den Signalen der Detektionseinrichtung die elektrische Antriebs- und Bremseinheit ansteuern und deren Leistungsabgabe regeln. Die Detektionseinrichtung kann getrennt von der Auflaufeinrichtung angeordnet werden, z.B. an anderen Teilen der elektrischen Antriebs- und Bremseinrichtung oder des Kraftfahrzeuganhängers.

Die Detektionseinrichtung ist zusätzlich zu der an der Auflaufeinrichtung angeordneten Erfassungseinrichtung vorgesehen und angeordnet.

Die Detektionseinrichtung kann unterschiedlich ausgebildet sein und kann unterschiedliche Funktionen haben. Sie kann zum einen eine Betätigung der Betriebsbremse detektieren. Hierbei kann z.B. an einem Bremskraftübertrager und/oder an einer oder mehreren Radbremsen eine bei der Bremsbetätigung auftretende Kraft und/oder ein auftretender Weg, und insbesondere dessen oder deren Änderung, detektiert werden. Bevorzugt werden Kraft und Weg detektiert. Ein Weg bzw. eine Wegänderung kann z.B. an einem Bremskraftübertrager detektiert werden, der zwischen dem Auflaufbremsaktuator und zumindest einer Radbremse angeordnet ist. Ein solcher Bremskraftaktuator kann z.B. aus einem Bremsgestänge, eine Waagbalken und Bowdenzügen oder einer hydraulischen Leitungsverbindung bestehen. Die Radbremsen können beliebig ausgebildet sein, z.B. als mechanische Bremsen, insbesondere Trommelbremsen oder Scheibenbremsen, oder als hydraulische Bremsen oder als elektrische Bremsen. Der Bremskraftübertrager kann entsprechend unterschiedlich ausgestaltet sein.

Die Detektionseinrichtung kann andererseits eine Neigung des Kraftfahrzeuganhängers aufnehmen. Dies ist ein eigenständiger Erfindungsaspekt, der auch bei anderen elektrischen Antriebs- und Bremseinrichtungen eingesetzt werden kann, die eine elektrische Antriebs- und Bremseinheit der beanspruchten Art aufweisen und die ohne Erfassungseinrichtung an der Auflaufeinrichtung sowie ggf. ohne Auflaufeinrichtung auskommen.

Durch die Neigungsdetektion kann z.B. festgestellt werden, ob das Gespann sich abweichend von der Horizontalen auf einer ansteigenden oder abfallenden Gefällestrecke befindet. Bei Gefällefahrt wirkt eine Hangabtriebskraft, welche auf das Auflaufverhalten einwirkt. Das Steuer- und Regelverhalten der Steuerung für die elektrische Antriebs- und Bremseinheit kann von der Neigungsinformation beeinflusst werden. Die Hangabtriebswirkung kann ggf. ausgefiltert werden, um die tatsächliche Brems- und Anzugbeschleunigungen zu ermitteln. Ein elektrisches Antreiben und/oder Bremsen kann an einer horizontalen Fahrbahn anders und insbesondere intensiver als an einer Gefällestrecke erfolgen. Die aus der Neigung bei Aufwärts- und Abwärtsfahrt entstehende Hangabtriebskraft kann durch angepasstes elektrisches Bremsen oder elektrisches Antreiben kompensiert werden. Der Hangabtrieb wirkt sich dadurch nicht auf das Zugkraftfahrzeug aus.

Die Detektionseinrichtung kann ferner eine Rückwärtsfahrt des Kraftfahrzeuganhängers detektieren. In diesem Fall ist das Verhalten der elektrischen Antriebs- und Bremseinrichtung anders als im Zugbetrieb. Eine erfasste Betätigung der Auflaufeinrichtung wird dann nicht als negatives Beschleunigen bzw. Bremsen interpretiert. Es wird ggf. auch keine elektrische Bremsung eingeleitet.

Bei einer Rückwärtsfahrt kann ein anderer Steuer- und Regelungsmodus eintreten. Die elektrische Antriebs- und Bremseinrichtung kann die Rückwärtsfahrt des Gespanns z.B. durch ein Antreiben der Anhängerräder unterstützen. Das ist z.B. auf einem glatten oder losen Untergrund von Vorteil.

Die Detektionseinrichtung kann andererseits eine Beschleunigung, insbesondere Querbeschleunigung, des Kraftfahrzeuganhängers im Fahrbetrieb, insbesondere Zugbetrieb, detektieren. Hierbei können z.B. Schlingerbewegungen des Kraftfahrzeuganhängers detektiert und evaluiert werden. Die elektrische Antriebs- und Bremseinrichtung kann zum Mindern bzw. Beseitigen solcher Schlingerbewegungen genutzt werden.

Das elektrische Bremsmoment kann beim Schlingerbremsen an das tatsächliche Anhängergewicht adaptiert werden, um ein Überbremsen zu vermeiden. Dies kann z.B. durch eine Begrenzung des elektrischen Bremsmoments auf einen festen Vorgabewert erfolgen, z.B. auf eine Bremsverzögerung von 2 bis 3 m/sec². Alternativ kann das tatsächliche Anhängergewicht sensorisch vor oder während der Fahrt aufgenommen und ein entsprechender Vorgabewert für das elektrischen Bremsmoment errechnet werden.

Alternativ oder zusätzlich ist es möglich, das elektrische Bremsmoment zu variieren und von einem niedrigen Anfangswert ausgehend bedarfsweise zu steigern. Hierfür kann die eintretende masseabhängige Verzögerung des Kraftfahrzeuganhängers in geeigneter Weise, z.B. von Radsensoren oder einem Beschleunigungssensor, erfasst werden. Wenn die gewünschte Verzögerung nicht erreicht wird und die Traktion ausreicht, kann das elektrische Bremsmoment erhöht werden.

Die Detektionseinrichtung kann ferner für sich allein oder in Verbindung mit der Erfassungseinrichtung eine Relativbeschleunigung und/oder einen Abstand zwischen dem Zugkraftfahrzeug und dem Kraftfahrzeuganhänger messen, z.B. optisch oder auf andere geeignete Weise.

Die verschiedenen Detektionsfunktionen der Detektionseinrichtung können jeweils einzeln oder in beliebiger Kombination mit einer oder mehreren anderen Detektionsfunktionen genutzt werden. Die Detektionseinrichtung ist hierfür entsprechend ausgebildet. Dies gilt sowohl für die alternative als auch die kombinative Anordnung von Detektionseinrichtung und Erfassungseinrichtung. Bei der kombinativen Anordnung können beliebige Detektionsfunktionen in beliebiger Zahl und einzeln oder in beliebiger Kombination genutzt werden.

Die Detektionseinrichtung kann einen oder mehrere Sensoren aufweisen. Dies können z.B. ein Radsensor für Drehzahl und/oder Moment, ein Radbremssensor für Bremsbetätigung bzw. Bremslüftungsspiel, ein Wegsensor z.B. am Bremsübertrager, ein Neigungssensor, ein Beschleunigungssensor für Längs- und/oder Querbeschleunigung, ein Gierratensensor oder dgl. sein.

Die Detektionseinrichtung kann auch instabile Fahrzustände des Kraftfahrzeuganhängers, insbesondere ein Blockieren und/oder ein Durchrutschen der mit der elektrischen Antriebs- und Bremseinheit verbundenen Fahrzeugräder erfassen. Die elektrische Antriebs- und Bremseinheit kann hierauf schnell und modulationsfähig reagieren, z.B. durch rasche und ggf. stotternd reversible Reduktion des elektrischen Antriebs- oder Bremsmoments. Sie kann dadurch schnell für eine Wiederherstellung ausreichender Traktion sorgen.

Die beanspruchte elektrische Antriebs- und Bremseinrichtung kann zusätzlich als Rangierantrieb für den Kraftfahrzeuganhänger ausgebildet sein. Der Kraftfahrzeuganhänger kann dabei bevorzugt abgekuppelt sein. Er kann alternativ am Zugkraftfahrzeug angekuppelt sein.

Die Ausbildung als Rangierantrieb ist ein eigenständiger Erfindungsaspekt. Die elektrische Antriebs- und Bremseinrichtung kann dabei anders als nach dem Hauptanspruch ausgebildet sein. Die Erfassungseinrichtung kann z.B. durch die Detektionseinrichtung ersetzt sein.

Für einen Rangierantrieb kann die elektrische Antriebs- und Bremseinrichtung eine Sensorik aufweisen, die ebenfalls mit der Steuerung verbunden ist. Mit der Sensorik können rangierspezifische physikalische Parameter aufgenommen werden. Dies können z.B. Drehzahl und/oder Drehrichtung und/oder Antriebsmoment von einem oder mehreren Fahrzeugrädern des Kraftfahrzeuganhängers sein. Ferner kann eine Bewegung über dem Untergrund, ein Abstand von Hindernissen oder dgl. sensiert werden. Mit einer Kamera oder dgl. ist ein automatisches zielgeführtes Rangieren möglich, z.B. zum Einparken und/oder zum Ankuppeln am Zugkraftfahrzeug.

Für den Rangierbetrieb kann eine geeignete Bedienungseinrichtung, insbesondere eine drahtlose Fernbedienung eingesetzt werden. Diese kann Steuerelemente zum Lenken des Kraftfahrzeuganhängers bei der Rangierfahrt in einer Geradeausbahn und in beliebigen Kurvenbahnen sowie bei Vorwärts- und Rückwärtsfahrt beinhalten. Eine Gleichlaufregelung für den Antrieb der Fahrzeugräder kann für eine stabile Geradeausfahrt oder Kurvenfahrt entsprechend der Einstellung an der Bedienungseinrichtung sorgen.

Die Kraftfahrzeuganhängekupplung, insbesondere Kugelkopfkupplung, ist beweglich an der Auflaufeinrichtung angeordnet. Sie kann dabei insbesondere linear in und gegen die Zugrichtung im Zug- und Gespannbetrieb beweglich sein. Die Kraftfahrzeuganhängekupplung kann derart beweglich an der Auflaufeinrichtung angeordnet sein, dass sie sich bei Auftreten einer negativen Beschleunigung bzw. bei einem Auflaufen des Kraftfahrzeuganhängers auf das Zugkraftfahrzeug ohne hindernde Festlegung oder Arretierung bewegen kann. Sie kann sich insbesondere klemmungsfrei bewegen.

Die Kraftfahrzeuganhängekupplung kann sich bereits bei einem Erstauftreten einer negativen Beschleunigung bzw. eines Auflaufens nach Überwindung der gesetzlich vorgegebenen Ansprechschwelle von 2 - 4 % der Gesamtmasse in Bewegung setzen. Die Ansprechschwelle kann z.B. durch die Federkraft eines Dämpfers in der Auflaufeinrichtung gebildet werden. Die Betriebsbremse kann dadurch über die Auflaufeinrichtung sicher und in gleicher Weise betätigt werden, wie wenn die elektrische Antriebs- und Bremseinheit nicht vorhanden oder außer Funktion wäre. Die Auflaufbremsung kann dadurch auch bei Ausfall der elektrischen Bremsung zuverlässig erfolgen. Die ungehinderte, insbesondere klemmungsfreie, Bewegung der Kraftfahrzeuganhängekupplung ist auch bei Rückwärtsfahrt des Zugkraftfahrzeugs und des Gespanns von Vorteil.

Die Auflaufeinrichtung weist mindestens ein mit der Kraftfahrzeuganhängekupplung gekoppeltes Teil auf, welches beim Auflaufen sowie ggf. beim Anzugbeschleunigen mitbewegt wird. Ein solches mitbewegtes Teil ist ein an der Kraftfahrzeuganhängekupplung befestigtes Schlepporgan, insbesondere eine Zugstange oder ein hohles Zugrohr. Ein mitbewegtes Teil kann auch ein mit der Zugstange oder dem Zugrohr verbundener Dämpfer oder der Auflaufbremsaktuator sein. Ein Dämpfer kann beispielsweise als Stoßdämpfer mit Gasdruckspeicher und einem ölgefüllten hydraulischen Arbeitsraum ausgebildet sein. Die Kennlinie des Stoßdämpfers kann auf die vorgenannte Ansprechschwelle ausgelegt sein.

Es ist vorgesehen, dass die Erfassungseinrichtung der Kraftfahrzeuganhängekupplung und/oder einem beim Auflaufen und ggf. beim Anzugbeschleunigen bewegten Teil der Auflaufeinrichtung zugeordnet ist. Der oder die besagten physikalischen Bewegungsparameter des Kraftfahrzeuganhängers können an dem mitbewegten Teil besonders gut und sicher erfasst werden.

Die Erfassungseinrichtung weist einen Wegmesser und einen Kraftmesser auf. Der Wegmesser und der Kraftmesser können jeweils einzeln oder mehrfach vorhanden sein. Die Kombination von Wegmesser und Kraftmesser erleichtert die Plausibilisierung der Messsignale. Zudem können Steuerung und Regelung der elektrischen Antriebs- und Bremseinheit besser und genauer erfolgen.

Der oder die Wegmesser sind bevorzugt an der Kraftfahrzeuganhängekupplung und/oder an dem besagten mitbewegten Teil der Auflaufeinrichtung angeordnet. Ein Wegmesser und/oder der Kraftmesser kann in Einzel- oder Mehrfachanordnung auch an der Detektionseinrichtung angeordnet sein.

Der Wegmesser und/oder der Kraftmesser können jeweils konstruktiv und funktional in unterschiedlicher Weise ausgebildet sein. Sie können jeweils ein oder mehrere Sensoren zur unmittelbaren oder mittelbaren Erfassung von Kraft- und/oder Weg aufweisen. Die Erfassung erfolgt an der Auflaufeinrichtung. serstrukturierung, ausgestaltet sein.

Einer der Kraftmesser ist an einem an der Kraftfahrzeuganhängekupplung befestigten Schlepporgan der Auflaufeinrichtung angeordnet. Ein Kraftmesser kann z.B. einen Kraftsensor und/oder einen Drucksensor aufweisen. Ein Kraftsensor kann z.B. auch an der Kraftfahrzeuganhängekupplung, insbesondere in oder an deren Kupplungspfanne angeordnet sein. Ein Kraftsensor kann auch an der Zugstange oder am Zugrohr und/oder am Dämpfer angeordnet sein. Ein solcher Kraftsensor kann z.B. als Dehnmessstreifen in beliebiger Ausbildung, z.B. in aufgeklebter Form oder in einer Laserstrukturierung, ausgestaltet sein.

Ein Drucksensor kann z.B. im Dämpfer angeordnet sein. Er kann dabei in beiden Arbeitskammern vor und hinter dem Dämpferkolben angeordnet sein.

In einer besonders günstigen Ausführungsform kann ein Kraftmesser zwischen einem Anschlagelement des Schlepporgans, insbesondere der Zugstange oder des Zugrohrs, und einem stationären Teil der Auflaufeinrichtung angeordnet sein. Das stationäre Teil kann z.B. ein Lager des Schlepporgans sein.

Ein solcher Kraftmesser erfasst die in Anschlagsstellung des Schlepporgans am stationären Teil der Auflaufeinrichtung auftretende Kraft. Hierbei kann die Kraftfahrzeuganhängekupplung durch eine Feder oder dgl. auch bei beschleunigungsfreier Zug- und Gespannfahrt in der besagten Anschlagstellung gehalten werden. Bei beschleunigungsfreier Zugfahrt und bei einer Anzugbeschleunigung durch das Zugkraftfahrzeug wird durch die Anschlagstellung permanent eine Kraft und ggf. deren Änderung bei der Anzugbeschleunigung erfasst. Beim negativen Beschleunigen bzw. Bremsen und beim Einlaufen der Kraftfahrzeuganhängekupplung wird die Anschlagstellung gelöst und dieser Umstand als Abfall des Kraftsignals detektiert.

Der Kraftmesser zwischen dem Anschlagelement des Schlepporgans und dem stationären Teil der Auflaufeinrichtung kann in einer besonders günstigen Ausführungsform einen verformbaren Messring mit mehreren Kraftsensoren aufweisen. Der Messring ist an oder auf der Zugstange oder dem Zugrohr angeordnet. Er wird zwischen dem Anschlagelement und dem stationären Teil der Auflaufeinrichtung in der Anschlagstellung eingespannt.

Bei Auftreten einer Zugkraft an der Kraftfahrzeuganhängekupplung durch die besagte Feder und/oder durch die Anzugbeschleunigung des Zugfahrzeugs wird der Messring deformiert und diese der Zugkraft entsprechende Verformung mittels Dehnmessstreifen der vorgenannten Art oder anderen kraftaufnehmenden Sensoren erfasst.

In einer besonders günstigen Ausführungsform ist ein Wegmesser an einem Auflaufbremsaktuator angeordnet.

Günstig ist hierbei eine Ausbildung des Auflaufbremsaktuators als drehbarer Umlenkhebel. Der Wegmesser kann dabei einen Drehgeber an der Achse des Umlenkhebels aufweisen.

Der Wegmesser kann alternativ oder zusätzlich andere wegaufnehmende Sensoren an anderer Stelle, z.B. zwischen Dämpfer und Zugrohr oder zwischen Zugstange oder Zugrohr und dem Gehäuse der Auflaufeinrichtung aufweisen. Eine andere Sensoranordnung ist zwischen der Kraftfahrzeuganhängekupplung und dem Gehäuse der Auflaufzugeinrichtung möglich. Der Weg der beim Bremsen einfahrenden Zugfahrzeuganhängekupplung kann auch auf andere Weise, z.B. als Abstandsänderung zwischen dem Kraftfahrzeug und dem Kraftfahrzeuganhänger erfasst werden. Hierfür kann z.B. die Erfassungseinrichtung einen Abstandssensor aufweisen. Dieser ist bevorzugt in Zugrichtung ausgerichtet. Er kann z.B. am Gehäuse der Auflaufeinrichtung angeordnet sein.

Die elektrische Antriebs- und Bremseinrichtung kann in der vorgenannten Weise zur Entlastung des Zugkraftfahrzeugs beim Bremsen und/oder Beschleunigen eingesetzt werden. Die elektrische Antriebs- und Bremseinheit weist für diese Funktion(en) einen wiederaufladbaren Energiespeicher auf. Aus diesem stammt die zur Antriebsunterstützung erforderliche elektrische Energie.

Der Energiespeicher kann in beliebig geeigneter Weise ausgebildet sein. Er kann z.B. als elektrischer Akkumulator oder als bevorzugt wiederaufladbare elektrische Batterie ausgebildet sein.

Alternativ kann die elektrische Energie bei der Einspeisung umgewandelt und in anderer Form im Energiespeicher gespeichert werden. Bei der Energieabgabe kann eine Rückwandlung in elektrische Energie erfolgen.

Die elektrische Antriebs- und Bremseinrichtung kann auch für eine Wiedergewinnung von elektrischer Energie beim elektrischen Bremsen ausgebildet sein. Hierfür weist z.B. die elektrische Antriebs- und Bremseinheit eine elektrische Rekuperationsbremse auf. Alternativ kann ein elektrisches Bremsen ohne Rekuperation erfolgen.

Bei der elektrischen Bremsung wird die kinetische Energie vom Generator in elektrische Energie umgewandelt und in den Energiespeicher eingespeist. Durch diese elektrische Energierückgewinnung kann der Energiespeicher im Zug- und Gespannbetrieb immer wieder aufgeladen werden. Dies ist insbesondere auf Gefällestrecken günstig. Durch die Wiederaufladung werden der Energiehaushalt und die Reichweite des Kraftfahrzeuganhängers und des Gespanns vergrößert. Ein bedarfsweises Nachladen des Energiespeichers kann über einen Anschluss für eine externe Energieversorgung erfolgen. Dieser ist z.B. im Deichselbereich nahe am Zugkraftfahrzeug und einem evtl. dortigen elektrischen Ladeanschluss angeordnet.

Im Gespannbetrieb mit einem Elektro- oder Hybrid-Zugfahrzeug können bei geeigneter Ausstattung der Ladestelle die Energiespeicher von Zugfahrzeug und Anhänger zugleich aufgeladen werden. Als Zubehör kann ein spezielles Verteilerkabel vorgesehen sein, welches die Aufladung beider Energiespeicher an einer gemeinsamen elektrischen Ladestelle ermöglicht.

Die elektrische Antriebs- und Bremseinheit weist mind. einen elektrischen Motor/Generator auf. Elektrischer Motor und Generator sind bevorzugt als Baueinheit ausgebildet, wobei der elektrische Motor in den elektrischen Generatorbetrieb umschaltbar ist. Alternativ können getrennte Einheiten vorhanden sein.

Aus Leistungsgründen ist es günstig, wenn der elektrische Motor/Generator als Wechselstrommaschine ausgebildet ist. Dies kann eine beliebige Art von Wechselstrommaschine sein, insbesondere eine Drehstrommaschine. Es kann sich z.B. um eine Asynchron-Maschine oder eine SynchronMaschine handeln. Alternativ ist eine Ausbildung als Gleichstrommaschine möglich.

Die elektrische Antriebs- und Bremseinheit kann einen elektrischen Umrichter aufweisen. Dieser kann z.B. einen Spannungswandler AC/DC und DC/AC sowie ggf. einen Pulserzeuger aufweisen. Hierüber kann der Motor/Generator mit einer Pulsweitenmodulation oder einer Pulsfrequenzmodulation beaufschlagt und angesteuert werden. Ein Umrichter kann auch als reiner Frequenzumrichter ohne Spannungsumrichtung ausgebildet sein. Ein Umrichter ist insbesondere bei Einsatz einer Wechselstrommaschine in Verbindung mit einem elektrischen Energiespeicher auf Gleichstrombasis von Vorteil.

Die elektrische Antriebs- und Bremseinheit kann eine Einrichtung zum Wärmen und/oder Kühlen aufweisen. Diese kann insbesondere für den Energiespeicher und/oder den Umrichter vorgesehen sein.

Die Steuerung steuert und ggf. regelt die Komponenten der elektrischen Antriebs- und Bremseinheit. Dies betrifft insbesondere die elektrischen Motoren/Generatoren und ggf. den Umrichter sowie die Wärme/Kühl-Einrichtung. Die Steuerung bewirkt auch das Thermomanagement und ggf. das Lade- und Entlademanagement des Energiespeichers. Die bevorzugt elektronische und programmierbare Steuerung weist eine elektronische Recheneinheit mit Mikroprozessor(en), Programm- und Datenspeichern sowie I/O-Schnittstellen auf.

Der elektrische Motor/Generator kann einzeln angeordnet sein und kann dabei ein linkes und ein rechtes Fahrzeugrad des Kraftfahrzeuganhängers oder auch eine Mehrzahl linker und rechter Fahrzeugräder antreiben. Ein Motor/Generator kann auch mehrfach vorhanden sein. Wenn ein Kraftfahrzeuganhänger mehrere Achsen, z.B. eine Tandemachse oder eine Tripleachse, aufweist, kann an jeder Achse ein einzelner Motor/Generator zum Antrieb der an der Achse angeordneten Fahrzeugräder vorhanden sein.

Ferner ist es möglich, an einer Achse mehrere, z.B. zwei Motoren/Generatoren anzuordnen. Dies hat hinsichtlich Bauraum und Leistung Vorteile. Weitere Vorteile ergeben sich für die Zusatzfunktion als Rangierantrieb. Ein Lenken und eine Kurvenfahrt beim Rangieren können durch Geschwindigkeitsunterschiede zwischen linken und rechten Fahrzeugrädern erfolgen. Die Fahrzeugräder können sich dabei gleichsinnig mit unterschiedlichen Geschwindigkeiten für eine Kurvenfahrt in Vorwärts-/Rückwärts-Richtung oder gegensinnig für ein Wenden auf der Stelle drehen. Ferner ist eine Drehbewegung von einem Fahrzeugrad nur auf einer Anhängerseite und ein Stillstand des Fahrzeugrads auf der anderen Anhängerseite möglich.

Die mehreren Motoren/Generatoren können jeweils direkt an einem Fahrzeugrad angeordnet sein. Sie können z.B. als Radnaben-Motor/Generator ausgebildet sein. Sie können alternativ jeweils mit Distanz vom Fahrzeugrad angeordnet sein und mit diesem über ein flexibles Treibmittel, z.B. eine gelenkig angebundene Treibwelle, verbunden sein.

Die elektrische Antriebs- und Bremseinheit kann ein Getriebe aufweisen, das dem elektrischen Motor/Generator vorgeschaltet ist. Das Getriebe kann unterschiedliche Ausbildungen und Funktionen haben. Das Getriebe kann z.B. ein Differential aufweisen, um bei einem gemeinsamen Antrieb von linken und rechten Fahrzeugrädern durch einen einzelnen Motor/Generator bei Kurvenfahrt einen Geschwindigkeitsausgleich zu bieten. Ein Differential kann verstellbar und ein Drehmoment sensierend ausgeführt sein. Ein Differential kann andererseits eine Differentialsperre aufweisen. Dies bietet Vorteile, um mehr Drehmoment beim elektrischen Antreiben und beim elektrischen Bremsen, insbesondere beim Rekuperationsbremsen, umsetzen zu können.

Das Getriebe kann ferner ein Schaltgetriebe mit zwei oder mehr Getriebestufen aufweisen. Das Schaltgetriebe kann von der Steuerung gesteuert bzw. geschaltet werden. Das Schaltgetriebe kann auch ein Automatikgetriebe sein, welches ggf. selbsttätig drehzahlabhängig mehrere Getriebestufen schaltet. Ein Schaltgetriebe ermöglicht auch ein Entkuppeln und Ankuppeln von Motor/Generator an ein Fahrzeugrad des Kraftfahrzeuganhängers. Das Entkuppeln und Ankuppeln kann zwangsgesteuert sein. Das Entkuppeln und Ankuppeln kann geschwindigkeitsabhängig sein, z.B. von einer niedrigen Fahrtgeschwindigkeit. Bei Erreichen einer Geschwindigkeitsschwelle kann bedarfsweise entkuppelt oder angekuppelt werden.

Alternativ oder zusätzlich kann eine von der Steuerung gesteuerte Kupplung vorhanden sein. Das Schaltgetriebe und die Kupplung sind jeweils ein selbstständiger Erfindungsaspekt. Ein Schaltgetriebe und/oder eine Kupplung kann auch bei anderen elektrischen Antriebs- und Bremseinrichtungen für Kraftfahrzeuganhänger ohne Auflaufeinrichtung und/oder ohne dortige Erfassungseinrichtung eingesetzt werden.

Alternativ ist auf andere Weise eine Schaltung von zwei oder mehr Getriebestufen möglich.

Das Schaltgetriebe hat Vorteile für einen Einsatz der elektrischen Antriebs- und Bremseinrichtung als Rangierantrieb. Die beim Rangieren anfallenden Raddrehzahlen und Fahrgeschwindigkeiten sind deutlich niedriger als im Zug- und Gespannbetrieb. Beim Zug- und Gespannbetrieb kann die elektrische Antriebs- und Bremseinrichtung für die aktuell zulässige Fahrgeschwindigkeit bis 100 km/h oder auch mehr ausgebildet sein. Das Schaltgetriebe kann z.B. zwischen einer Schnellfahrstufe für diesen Zug- und Gespannbetrieb und einer Langsamfahrstufe für den Rangierbetrieb umgeschaltet werden. Alternativ oder zusätzlich kann eine Umschaltmöglichkeit mit mehrere Getriebestufen für den Zug- und Gespannbetrieb vorgesehen sein. Das Getriebe und dessen ein oder mehrere Getriebekomponenten können von der Steuerung der elektrischen Antriebs- und Bremseinrichtung angesteuert und beaufschlagt werden.

Die Kraftfahrzeuganhängekupplung und/oder das daran verbundene bzw. befestigte Schlepporgan kann von einer Feder beaufschlagt werden. Die Feder kann zur Bildung einer definierten Grundstellung der Kraftfahrzeuganhängekupplung in oder gegen die Zugrichtung bzw. Anhängerlängsrichtung benutzt werden. Dies ist zum Regeln der Leistungsabgabe der elektrischen Antriebs- und Bremseinheit von Vorteil.

Die Feder kann eine gegen die Zugrichtung wirkende Kraft erzeugen. Die Feder kann z.B. das Schlepporgan beaufschlagen. Die Feder kann die Kraftfahrzeuganhängekupplung bzw. das Schlepporgan in beschleunigungsfreien Zug- und Gespannbetrieb in einer Neutralstellung mit einer vorgegebenen Zuglast halten. Die Zuglast ist von der Feder und ihrer Ausbildung abhängig. Sie kann z.B. ca. 100 N betragen.

Aus der Neutralstellung kann sich die Kraftfahrzeuganhängekupplung in und gegen die Zugrichtung bewegen. Bei einer Anzugbeschleunigung des Zugkraftfahrzeugs findet eine solche Bewegung in Zugrichtung erst nach Überwinden der Federkraft statt. Die Feder kann z.B. vorgespannt sein. Eine Bewegung gegen die Zugrichtung bzw. ein Einfahren der Kraftfahrzeuganhängekupplung bei einer negativen Beschleunigung bzw. einem Bremsen ist ohne hindernde Festlegung oder Arretierung möglich.

Die besagte Steuerung kann die Leistungsabgabe der elektrischen Antriebs- und Bremseinrichtung steuern und regeln. Dies kann die mechanische Leistungsabgabe im Motorbetrieb und die elektrische Leistungsabgabe im Generatorbetrieb betreffen. Im Generatorbetrieb kann dies außerdem die Leistungsabgabe in Form einer elektrischen Bremswirkung und einer Rekuperation betreffen.

Eine Regelung der besagten Leistungsabgabe erfolgt nach der von der Erfassungseinrichtung und/oder der Detektionseinrichtung erfassten oder detektierten Führungsgröße. Dies kann z.B. die beim negativen oder positiven Beschleunigen auftretende Kraft und/oder der bei diesen Beschleunigungen auftretende Weg und die Änderung dieser Parameter sein.

Eine Regelung kann auf einen Vorgabewert der Führungsgröße erfolgen. Der Vorgabewert kann "0" sein oder kann eine andere bestimmte Größe bzw. einen Offset haben. Beim Schlingerbremsen wird bis zum Verschwinden der Schlingerbewegung elektrisch gebremst.

Eine Regelung kann z.B. auf die erwähnte Neutralstellung erfolgen. Alternativ kann eine Regelung auf eine andere vorgegebene Stellung der Kraftfahrzeuganhängekupplung bzw. des Schlepporgans geschehen. Dies kann z.B. eine Anschlagstellung des Schlepporgans an einem relativ ortsfesten Teil der Aufnahmeeinrichtung, z.B. einem Lager, sein. Die Vorgabestellung, insbesondere die Neutralstellung, kann durch die Erfassungseinrichtung detektiert werden.

Bei den bevorzugten Ausführungsbeispielen und bei Einsatz eines Messrings mit Kraftsensoren kann eine Feder entfallen. Eine Feder kann außerdem entfallen, wenn mit der Führungsgröße des erfassten Wegs gearbeitet wird und auf eine Zugkraft von 0 ausgeregelt wird.

Die Leistungsabgaben der Antriebs- und Bremseinheit kann bei einer negativen Beschleunigung bzw. im Auflaufbetrieb und bei vorhandener Auflaufbewegung der Auflaufeinrichtung derart geregelt werden, dass das elektrische Bremsen durch den oder die Generatoren im Spielbereich der Betriebsbremse und der Auflaufeinrichtung erfolgt. Dies kann vor einem Bremseingriff der Betriebsbremse an den Radbremsen erfolgen. Ein solcher Bremseingriff kann auch vermieden werden. Dies ist ein eigenständiger Erfindungsaspekt, der auch bei anderen elektrischen Antriebs- und Bremseinrichtungen eingesetzt werden kann, die eine elektrische Antriebs- und Bremseinheit der beanspruchten Art aufweisen und die ohne Erfassungseinrichtung an der Auflaufeinrichtung sowie ggf. ohne Auflaufeinrichtung auskommen.

Bei dieser Regelung wird das im Bremsübertragungsweg bestehende Bewegungsspiel ausgenutzt. Ein solches Bewegungsspiel kann am Auflaufbremsaktuator und/oder am Bremsübertrager und/oder an einer Radbremse bestehen. Bei einer Radbremse kann dies z.B. das Lüftungsspiel von Bremselementen, insbesondere Bremsbacken einer Bremstrommel, betreffen.

Trotz eines sofortigen Ansprechens der Auflaufeinrichtung und einer Einfahrbewegung der Kraftfahrzeuganhängekupplung bzw. des Schlepporgans kann durch elektrisches Bremsen der Kraftfahrzeuganhänger derart schnell und wirksam verlangsamt werden, dass die Radbremsen bzw. die Betriebsbremse nicht eingreifen müssen.

Unter einem anderen Erfindungsaspekt kann die Steuerung die Leistungsabgabe der elektrischen Antriebs- und Bremseinheit derart regeln, dass eine vorgegebene und von der Erfassungseinrichtung detektierte Zuglast an der Auflaufeinrichtung anliegt. Hierüber kann z.B. in der vorerwähnten Weise ein hohes Anhängergewicht kompensiert werden, sodass auch ein schwächeres Zugfahrzeug den Kraftfahrzeuganhänger sicher bewegen kann.

Ferner ist es möglich, die Leistungsabgabe der elektrischen Antriebs- und Bremseinheit, insbesondere die elektrische Bremswirkung bzw. das elektrische Bremsmoment, vom aktuellen Gewicht bzw. der Masse des Kraftfahrzeuganhängers abhängig zu machen. Dies ist besonders bei einer Schlingerbremsfunktion, aber auch beim gemeinsamen Bremsen von Zugkraftfahrzeug und Kraftfahrzeuganhänger, von Vorteil. Ein Überbremsen des Kraftfahrzeuganhängers kann verhindert werden. Die Masse bzw. das Gewicht des Kraftfahrzeuganhängers können mit einer geeigneten Sensoranordnung detektiert werden.

Bei der vorgenannten Regelung der Leistungsabgabe auf eine vorgegebene und von der Erfassungseinrichtung detektierte Zuglast kann eine solche Gewichtsanpassung der Bremswirkung ebenfalls erfolgen.

Ein mit der beanspruchten elektrischen Antriebs- und Bremseinrichtung ausgestatteter, auflaufgebremster Kraftfahrzeuganhänger bietet eine hohe Betriebssicherheit und einen großen Fahrkomfort für sich und für das Gespann. Negative Auswirkungen auf das Zugkraftfahrzeug, z.B. beim Bremsen in Kurven, auf glatter Fahrbahn oder dgl. können vermieden werden. Das Gespann kann in allen Fahrbetriebszuständen stabilisiert werden. Die positiven Wirkungen treten auch bei einer Knickstellung zwischen Zugkraftfahrzeug und Kraftfahrzeuganhänger ein. Energiesparvorteile beim Zugkraftfahrzeug ergeben sich auch, wenn dieses einen Verbrennungsmotor hat.

Die vorgenannten Ausgestaltungen und Vorteile ergeben sich auch bei anderen Arten von Fahrzeuganhängern, die von einem durch Muskelkraft oder auf andere Weise angetriebenen Zugfahrzeug bewegt werden. Ferner kann der Fahrzeuganhänger, insbesondere Kraftfahrzeuganhänger, von einem entsprechend ausgebildeten Fahrzeug mittels Motorkraft, Muskelkraft oder einer anderen Antriebskraft geschoben werden. Unter ein Zugfahrzeug, insbesondere Zugkraftfahrzeug, werden daher auch schiebende Fahrzeuge, insbesondere Kraftfahrzeuge, subsumiert.

In den Unteransprüchen sind vorteilhafte Ausgestaltungen der Erfindung angegeben.

Für die beanspruchte elektrische Antriebs- und Bremseinrichtung und den damit ausgerüsteten Fahrzeuganhänger sind ferner folgende Ausgestaltungen einzeln oder in Kombination von Vorteil.

Die Erfassungseinrichtung der elektrischen Antriebs- und Bremseinrichtung nimmt Weg und Kraft des positiv oder negativ beschleunigten Fahrzeuganhängers im Zug- und Gespannbetrieb auf.

Die Steuerung steuert die elektrische Antriebs- und Bremseinheit in Abhängigkeit von den Signalen einer Detektionseinrichtung an und regelt deren Leistungsabgabe.

Die Detektionseinrichtung kann eine Betätigung der Betriebsbremse detektieren.

Die Detektionseinrichtung kann eine Neigung und/oder eine Rückwärtsfahrt und/oder ein Schlingern und/oder eine Beschleunigung des Fahrzeuganhängers, insbesondere Kraftfahrzeuganhängers, detektieren.

Die elektrische Antriebs- und Bremseinrichtung kann zusätzlich als Rangierantrieb für den bevorzugt abgekuppelten Fahrzeuganhänger, insbesondere Kraftfahrzeuganhänger ausgebildet sein.

Die elektrische Antriebs- und Bremseinrichtung kann eine mit der Steuerung verbundene Sensorik für einen Rangierbetrieb des bevorzugt abgekuppelten Fahrzeuganhängers, insbesondere Kraftfahrzeuganhängers, aufweist.
die Fahrzeuganhängekupplung, insbesondere Kraftfahrzeuganhängekupplung, kann derart beweglich an der Auflaufeinrichtung angeordnet sein, dass sie sich bei Auftreten einer negativen Beschleunigung bzw. bei einem Auflaufen des Fahrzeuganhängers, insbesondere Kraftfahrzeuganhängers, auf das Zugfahrzeug, insbesondere Zugkraftfahrzeug, ohne hindernde Festlegung oder Arretierung, insbesondere klemmungsfrei, bewegen kann.

Ein Schlepporgan kann eine Zugstange oder ein Zugrohr und ggf. einen bevorzugt federbelasteten Dämpfer aufweisen.

Der Wegmesser und/oder der Kraftmesser kann jeweils einzeln der mehrfach vorhanden sein.

Der Wegmesser und/oder der Kraftmesser kann jeweils einen oder mehrere Sensoren zur unmittelbaren oder mittelbaren Erfassung von Kraft und/oder Weg, bevorzugt Kraft und Weg, aufweisen.

Ein Kraftmesser kann an oder in einem Dämpfer angeordnet sein.

Ein Auflaufbremsaktuator kann als drehbarer Umlenkhebel ausgebildet sein, wobei der Wegmesser einen Drehgeber an der Achse des Umlenkhebels aufweist.

Die Erfassungseinrichtung kann einen bevorzugt in Zugrichtung ausgerichteten Abstandssensor aufweisen.

Die elektrische Antriebs- und Bremseinheit kann einen wiederaufladbaren, bevorzugt elektrischen Energiespeicher aufweisen und/oder kann eine Rekuperationsbremse aufweisen und/oder kann mindestens einen elektrischen Motor/Generator aufweisen.

Der elektrische Motor/Generator kann als Wechselstrommaschine ausgebildet sein.

Die elektrische Antriebs- und Bremseinheit kann einen Anschluss für eine externe Energieversorgung aufweisen.

Die elektrische Antriebs- und Bremseinheit kann einen elektrischen Umrichter aufweisen.

Der elektrische Umrichter kann einen Spannungswandler AC/DC und DC/AC sowie ggf. einen Pulserzeuger aufweisen.

Die elektrische Antriebs- und Bremseinheit kann eine Einrichtung zum Wärmen und/oder Kühlen aufweisen, insbesondere für den Energiespeicher und/oder für den Umrichter.

Die elektrische Antriebs- und Bremseinheit kann eine dem elektrischen Motor/Generator vorgeschaltete Kupplung aufweisen und/oder kann ein dem elektrischen Motor/Generator vorgeschaltetes Getriebe aufweisen.

Das Getriebe kann ein Differential aufweisen.

Das Getriebe kann ein Schaltgetriebe, insbesondere ein Automatikgetriebe, aufweisen.

Eine Radbremse des Fahrzeuganhängers, insbesondere Kraftfahrzeuganhänger, kann als mechanische oder hydraulische oder elektrische Bremse ausgebildet sein.

Das Schlepporgan kann von einer Feder beaufschlagt und im beschleunigungsfreien Zug- und Gespannbetrieb in einer Neutralstellung mit einer vorgegebenen Zuglast gehalten werden .

Die Steuerung kann die Leistungsabgabe der elektrischen Antriebs- und Bremseinheit auf die Neutralstellung regeln. Die Erfassungseinrichtung kann die Neutralstellung detektieren.

Die elektrische Antriebs- und Bremseinrichtung kann auf ein zulässiges Gesamtgewicht des Fahrzeuganhängers von mindestens 500 kg, insbesondere 1300 kg und mehr, ausgelegt sein.

Die elektrische Antriebs- und Bremseinrichtung kann für einen Kraftfahrzeuganhänger vorgesehen und ausgebildet sein, der zum Ankuppeln an ein Zugkraftfahrzeug ausgelegt ist.

Der Fahrzeuganhänger, insbesondere Kraftfahrzeuganhänger, kann ein Chassis mit Längsträgern und einer starren oder schwenkbaren Deichsel aufweisen.

Der Fahrzeuganhänger, insbesondere Kraftfahrzeuganhänger, kann ein zulässiges Gesamtgewicht von mindestens 500 kg, insbesondere 1300 kg und mehr, sowie eine entsprechend ausgelegte Fahrzeuganhängekupplung, insbesondere Kraftfahrzeuganhängekupplung, aufweisen.

Der ahrzeuganhänger, insbesondere Kraftfahrzeuganhänger, kann einen Aufbau aufweisen. Er kann als Wohnwagen oder als Nutzfahrzeug ausgebildet sein.

Die Erfindung ist in den Zeichnungen beispielhaft und schematisch dargestellt. Im Einzelnen zeigen:
- Figur 1:: ein Gespann mit einem Zugkraftfahrzeug und einem Kraftfahrzeuganhänger mit einer elektrischen Antriebs- und Bremseinrichtung,
- Figur 2:: eine Draufsicht auf den Kraftfahrzeuganhänger mit einer Schräglenkerachse gemäß Pfeil II von Figur 1,
- Figur 3:: eine Draufsicht einer Variante zur Figur 2 mit einer Längslenkerachse,
- Figur 4:: eine perspektivische Darstellung einer Auflaufeinrichtung,
- Figur 5:: eine aufgebrochene Seitenansicht der Auflaufeinrichtung von Figur 4 mit einer Erfassungseinrichtung,
- Figur 6 bis 8:: die Auflaufeinrichtung von Figur 5 in einer anderen aufgebrochenen Seitenansicht und in verschiedenen Betriebsstellungen mit einem Wegmesser am Umlenkhebel,
- Figur 9 und 10:: eine Variante der Auflaufeinrichtung in einer Seitenansicht und mit einem Kraftmesser in verschiedenen Betriebsstellungen,
- Figur 11 bis 13:: Varianten eines Messrings mit Kraftsensoren,
- Figur 14:: eine aufgebrochene Seitenansicht der Auflaufeinrichtung mit verschiedenen Alternativen einer Erfassungseinrichtung und deren Sensoren,
- Figur 15:: eine Variante mit einem Tretrad und einem Fahrzeuganhänger und
- Figur 16:: eine Variante mit einem anderen Tretrad und einem Fahrzeuganhänger.

Die Erfindung betrifft eine elektrische Antriebs- und Bremseinrichtung (9) für einen an ein Zugfahrzeug (2) ankuppelbaren, auflaufbremsbaren Fahrzeuganhänger (1), insbesondere Kraftfahrzeuganhänger. Die Erfindung betrifft ferner einen solchen Fahrzeuganhänger (1), insbesondere Kraftfahrzeuganhänger, mit einer elektrischen Antriebs- und Bremseinrichtung (9). Ferner umfasst die Erfindung auch ein Verfahren zum Steuerung und Regeln einer elektrischen Antriebs- und Bremseinrichtung (9).

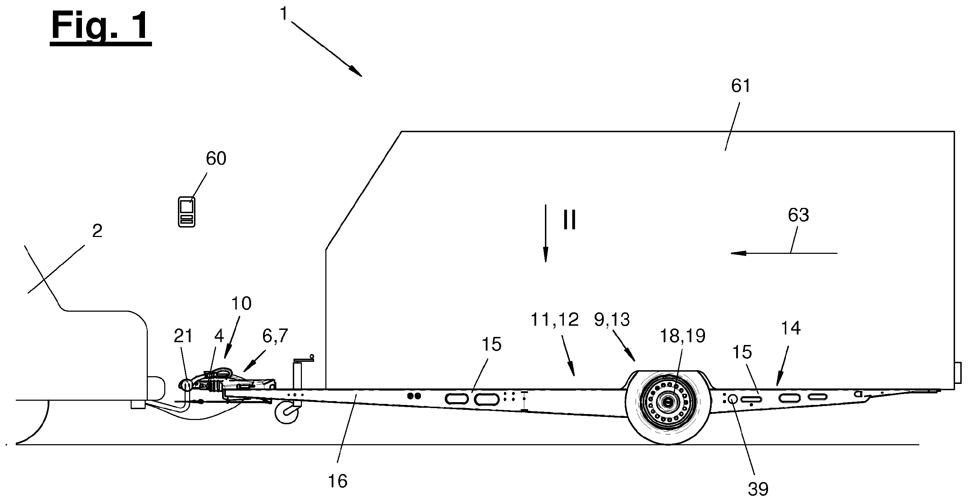

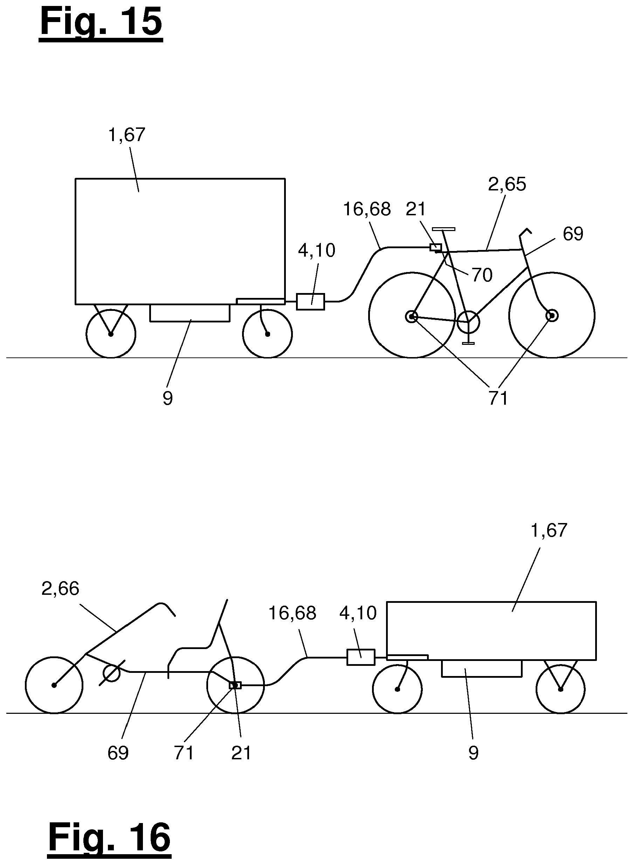

Figur 1 bis 14 zeigen einen Kraftfahrzeuganhänger (1) für ein Zugkraftfahrzeug (2). In Figur 15 und 16 sind beispielhaft und schematisch Varianten einer anderen Art von Fahrzeuganhänger (1), z.B. Tretradanhänger, und eines anderen Zugfahrzeugs (2), z.B. eines Tretrads (65,66), dargestellt.

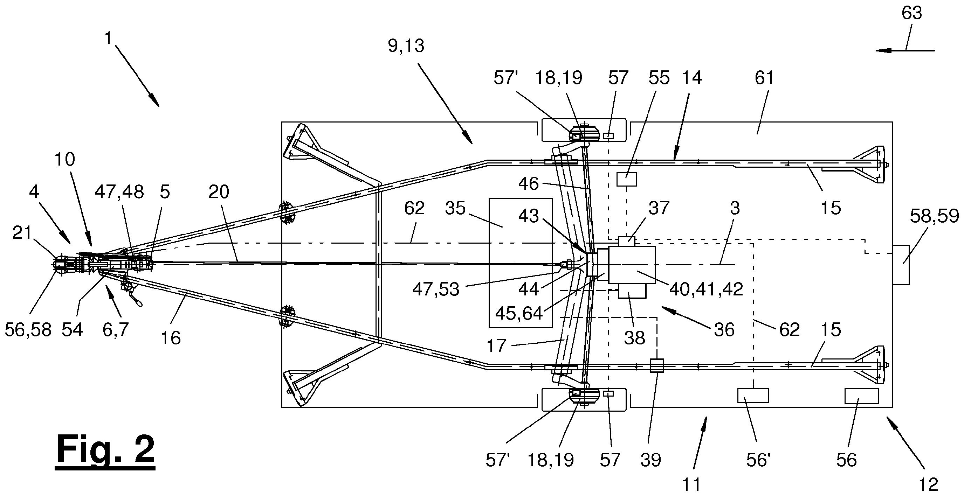

Figur 1 und 2 zeigen einen Kraftfahrzeuganhänger (1) in Ankuppelstellung an einem Zugkraftfahrzeug (2). Das gekuppelte Gespann bewegt sich bei der Vorwärtsfahrt in Fahrtrichtung oder Zugrichtung (63).

Das Zugkraftfahrzeug (2) weist am Heck eine Anhängekupplung auf, die z.B. einen Kupplungsarm mit einem Kugelkopf am Ende hat. Alternativ ist eine andere Kupplungsgestaltung möglich. Das Zugfahrzeug (2) weist einen Fahrantrieb auf, der einen Verbrennungsmotor oder einen Elektromotor oder einen Hybridantrieb mit einer Kombination aus einem Elektromotor und einem Verbrennungsmotor aufweisen kann.

Der Kraftfahrzeuganhänger (1) ist auflaufgebremst. Er weist eine elektrische Antriebs- und Bremseinrichtung (9) und ein Chassis (14) sowie eine Bremseinrichtung mit einer auflaufbetätigbaren Betriebsbremse (6) sowie ggf. einer Feststellbremse (7), z.B. einer Handbremse, auf. Auf dem Chassis (14) ist ein Aufbau (61) angeordnet. Dies kann z.B. ein Kastenaufbau eines Wohnanhängers oder eines Nutzanhängers, eine Plattform, eine Pritsche oder dgl. sein. Der Kraftfahrzeuganhänger (1) ist z.B. als Wohnwagen oder als Nutzanhänger ausgebildet.

Das Chassis (14) weist Längsträger (15) und an dem in Zugrichtung (63) vorderen Ende eine Deichsel (16) auf. Dies ist z.B. eine mit den Längsträgern (15) verbundene starre V-Deichsel (16). Die Deichsel kann alternativ als Rohrdeichsel oder in anderer Weise, z.B. als Schwenkdeichsel (68) mit einem Drehschemel, ausgebildet sein.

Am vorderen Deichselende ist eine Auflaufeinrichtung (4) mit einer auflauffähigen Kraftfahrzeuganhängekupplung (21) angeordnet, die ein Ankuppeln am Zugkraftfahrzeug (2) ermöglicht. Die Kraftfahrzeuganhängekupplung (21) ist z.B. als Kugelkopfkupplung ausgebildet und weist eine Kupplungspfanne (22) zur Aufnahme des Kugelkopfs sowie eine Kupplungsmechanik auf. Alternativ ist eine andere Kupplungsausbildung möglich. Das Chassis (14) kann ein oder mehrere Querträger aufweisen. Hierauf kann auch verzichtet werden. Ferner können Hubstützen, ein Stützrad und andere Komponenten am Chassis (14) angebaut sein.

Am Chassis (14) ist außerdem eine Fahrzeugachse (17) angeordnet. Diese weist einen Achskörper, insbesondere ein Achsrohr, mit endseitig schwenkbar gelagerten Radschwinghebeln auf, an denen jeweils ein Fahrzeugrad (18) und eine Radbremse (19) angeordnet sind. Die Fahrzeugachse (17) kann einzeln oder mehrfach vorhanden sein, z.B. in Form einer Tandemachse oder Tripleachse oder dgl.. Figur 2 zeigt eine Ausbildung der Fahrzeugachse (17) als Schräglenkerachse. In der Draufsicht von Figur 2 ist eine Variante als Längslenkerachse dargestellt. Die Fahrzeugachse (17) kann eine Federung und Stoßdämpfer aufweisen. Eine Federung kann z.B. als Gummifederung oder Drehstabfederung im Achskörper, als Luftfederung oder Schraubfederung mit Anbindung an die Radlenker oder in anderer Weise ausgebildet sein.

Die Radbremsen (19) können in beliebiger Weise ausgebildet sein. In den gezeigten Ausführungsbeispielen sind sie als mechanische Radbremsen in Form von Trommelbremsen ausgestaltet. Es sind Scheibenbremsen möglich. Ferner können die Radbremsen (19) auch als hydraulische oder elektrohydraulische Bremsen oder auch als elektrische Bremsen ausgestaltet sein.

Zur Bremseinrichtung, insbesondere zur Betriebsbremse (6), zählen die besagten Radbremsen (19) und ein Auflaufbremsaktuator (5) an der Auflaufeinrichtung (4) sowie ein Bremskraftübertrager (20), der den Auflaufbremsaktuator (5) mit den einzelnen Radbremsen (19) verbindet und die Bremskraft überträgt.

Bei den gezeigten mechanischen Radbremsen (19) ist der Bremskraftaktuator (5) z.B. als ein um eine Achse (30) schwenkbarer Umlenkhebel (29) ausgestaltet. Der Bremskraftübertrager (20) ist als Bremsgestänge oder Bremsseil mit einem Verteiler, insbesondere einem Waagbalken, und hier angeschlossenen sowie zu den Radbremsen (19) führenden Seilzügen, insbesondere Bowdenzügen, ausgebildet. Alternativ können der Bremsaktuator (5) und der Bremsübertrager (20) eine beliebige andere Ausgestaltung haben, z.B. mit Elektro- oder Hydraulikelementen. Dies kann auch von der Art der Radbremsen (19), insbesondere in einer hydraulischen oder elektrohydraulischen Ausführung sowie einer Elektrobremse, abhängen.

Am Fahrzeuganhänger (1) ist die elektrische Antriebs- und Bremseinrichtung (9) angeordnet. Diese beinhaltet zumindest eine elektrische Antriebs- und Bremseinheit (36), die den Kraftfahrzeuganhänger (1) elektrisch antreibt und elektrisch bremst, was zusätzlich zur Betriebsbremse (6) erfolgt. Die elektrische Antriebs- und Bremseinheit (36) ist mit den linken und rechten Fahrzeugrädern (18) in geeigneter Weise verbunden, wobei sie diese elektrisch antreibt und/oder elektrisch bremst. Ferner ist eine Steuerung (37) vorhanden, welche die elektrische Antriebs- und Bremseinheit (36) ansteuert. Sie kann auch deren Leistungsabgabe regeln.

Die elektrische Antriebs- und Bremseinrichtung (9) umfasst auch die Auflaufeinrichtung (4) mit der Kraftfahrzeuganhängekupplung (21) und mit dem Auflaufbremsaktuator (5). Ferner gehört eine Erfassungseinrichtung (10) dazu, die an der Auflaufeinrichtung (4) angeordnet ist und die außerdem mit der Steuerung (37) verbunden ist. Die Erfassungseinrichtung (10) erfasst die physikalischen Bewegungsparameter des Kraftfahrzeuganhängers (1) im Zug- oder Gespannbetrieb und übermittelt elektrische Signale an die Steuerung (37). In Abhängigkeit von diesen Signalen steuert die Steuerung (37) die elektrische Antriebs- und Bremseinheit (36) an und regelt deren Leistungsabgabe. Zusätzlich zur Erfassungseinrichtung (10) ist eine Detektionseinrichtung (11) Bestandteil der elektrischen Antriebs- und Bremseinrichtung (9). Die Detektionseinrichtung (11) ist ebenfalls mit der Steuerung (37) signaltechnisch verbunden. Die Steuerung (37) steuert in Abhängigkeit von den Signalen der Detektionseinrichtung (11) die elektrische Antriebs- und Bremseinheit (36) an und regelt deren Leistungsabgabe. Die Detektionseinrichtung (11) ist bevorzugt getrennt von der Auflaufeinrichtung (4) angeordnet bzw. anordenbar. Sie dient zur Detektion von weiteren physikalischen Bewegungsparametern des Kraftfahrzeuganhängers (1) im Zug- und Gespannbetrieb. Die Auflaufeinrichtung (4), die Erfassungseinrichtung (10) und die Detektionseinrichtung (11) werden nachfolgend erläutert.

Zur elektrischen Antriebs- und Bremseinrichtung (9) können weitere Komponenten gehören. Dies können z.B. die Betriebsbremse (6) und ggf. die Feststellbremse (7) sowie die ein oder mehreren Fahrzeugachsen (17) mit Fahrzeugrädern (18) und Radbremsen (19) sein.

Die elektrische Antriebs- und Bremseinrichtung (9) kann mit dem jeweiligen Komponentenumfang an einen Hersteller von Fahrgestellen oder an einen Hersteller des kompletten Kraftfahrzeuganhängers (1) geliefert werden. Dieser Hersteller ergänzt zur Herstellung des Kraftfahrzeuganhängers (1) die fehlenden Teile des Chassis (14), insbesondere die Längsträger (15) und die Deichsel (16). Soweit noch nicht als Bestandteil der elektrischen Antriebs- und Bremseinrichtung (9) vorhanden, können auch die ein oder mehreren Fahrzeugachsen (17) nebst Fahrzeugrädern (18) und Radbremsen (19) sowie der Bremsübertrager (20) und ggf. auch die Feststellbremse (7) ergänzt werden.

Die elektrische Antriebs- und Bremseinheit (36) kann einen wiederaufladbaren Energiespeicher (35) aufweisen. Dies ist vorzugsweise ein elektrischer Energiespeicher (35), z.B. in Form eines Akkumulators oder einer wiederaufladbaren Batterie, insbesondere einer Lithium-Ionen-Batterie oder Lithium-Polymer-Batterie. Der elektrische Energiespeicher (35) kann auch die Bord- oder Systemversorgung für den Kraftfahrzeuganhänger (1) und insbesondere für dessen Aufbau (61) bilden. Alternativ kann hierfür ein separater und anhängereigener Energiespeicher vorhanden sein. Die elektrische Antriebs- und Bremseinheit (36) kann einen Anschluss (39) für eine externe Energieversorgung, z.B. eine Ladebuchse für eine elektrische Ladestation, aufweisen. Der Anschluss (39) kann an geeigneter Stelle am Chassis (14) oder am Aufbau (61) angeordnet sein, z.B. an der Deichsel (16).

Die elektrische Antriebs- und Bremseinheit (36) weist mindestens einen elektrischen Motor/Generator (40,41) auf. Der Motor (40) und der Generator (41) sind in den gezeigten Ausführungsbeispielen als Baueinheit dargestellt, wobei der Motor (40) bei geeigneter Beschaltung durch die Steuerung (37) im Schleppbetrieb als Generator (41) fungiert. Der elektrische Motor/Generator (40,41) ist jeweils mit dem Energiespeicher (35) elektrisch leitend verbunden und wird von der Steuerung (37) angesteuert sowie in seiner Leistungsabgabe geregelt.

Die elektrische Antriebs- und Bremseinheit (36) weist eine Rekuperationsbremse (42) auf. Die vom entsprechend beschalteten Generator (41) beim elektrischen Bremsen im Schleppbetrieb steuer- oder regelbar erzeugte elektrische Energie wird in den Energiespeicher (35) eingespeist und ein Bremsmoment am zugeordneten Fahrzeugrad (18) erzeugt.

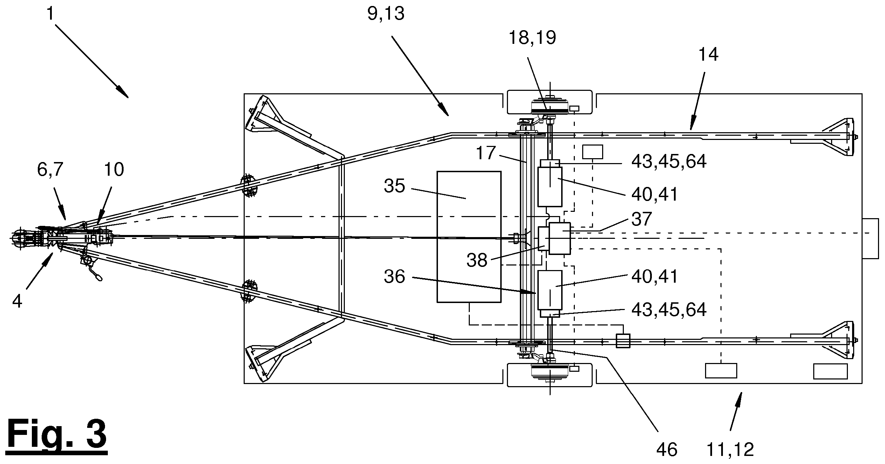

In der Variante von Figur 2 ist ein elektrischer Motor/Generator (40,41) in Einzelanordnung vorhanden und z.B. mittig relativ zu einer zentralen Längsachse (3) des Fahrzeuganhängers (1) angeordnet. Figur 3 zeigt eine Variante mit zwei Motoren/Generatoren (40,41), die jeweils einem Fahrzeugrad (18) zugeordnet sind und beidseits der Längsachse (3) angeordnet sind.

Die gezeigte Ausbildung und Anordnung von Motor/Generator (40,41) betrifft eine einzelne Fahrachse (17). Bei einer mehrfachen Achsanordnung können die Motoren/Generatoren (40,41) jeweils in Einzel- oder Mehrfachanordnung an einer oder mehreren weiteren Fahrzeugachsen angeordnet sein. Hierauf kann ggf. auch verzichtet werden, wobei die ein oder mehreren weiteren Fahrzeugachsen als Schleppachsen ausgebildet sind. Sie können ggf. mit einer entsprechenden Antriebs- und Getriebeverteilung auch von der oder den vorhanden Motoren/Generatoren (40,41) beaufschlagt werden.

Der jeweilige elektrische Motor/Generator (40,41) kann in beliebig geeigneter Weise ausgebildet sein. Bevorzugt wird eine Ausbildung als elektrische Wechselstrommaschine. Dies kann insbesondere eine Drehstrommaschine, z.B. eine Synchronmaschine, sein.

Die elektrische Antriebs- und Bremseinheit (36) kann hierfür einen elektrischen Umrichter (38) aufweisen. Dieser kann z.B. einen Spannungswandler für Wechselstrom und Gleichstrom (AC/DC) und umgekehrt (DC/AC) aufweisen. Bei einer Wechselstrommaschine kann der elektrische Umrichter (38) mit dem Spannungswandler AC/DC und DC/AC zwischengeschaltet werden. Zusätzlich oder alternativ kann der elektrische Umrichter (38) einen steuerbaren Pulserzeuger aufweisen, mit dem z.B. eine Pulsweitenmodulation oder eine Pulsfrequenzmodulation gebildet werden kann. Der elektrische Umrichter (38) ist mit der Steuerung (37) verbunden und kann von dieser angesteuert werden.

Die elektrische Antriebs- und Bremseinheit (36) kann eine nicht dargestellte Einrichtung zum Wärmen und/oder Kühlen des Energiespeichers (35) und des Umrichters (38) sowie ggf. weiterer ihrer Komponenten aufweisen. Die besagte Einrichtung kann mit der Steuerung (37) verbunden sein und von dieser gesteuert und ggf. mittels geeigneter Sensorik geregelt werden. Der Energiespeicher (35) kann auch eine eigene Regelung haben.

Bei der Anordnung von Figur 2 ist der z.B. zentrale Motor/Generator (40,41) mit den seitlich beabstandeten Fahrzeugrädern (18) über ein flexibles und den Radschwingbewegungen folgendes Treibmittel (46) verbunden. Dies kann z.B. eine gelenkig angebundene Treibwelle sein. Bei der Ausführungsform von Figur 3 sind die beiden Motoren/Generatoren (40,41) mit ihrem zugeordneten, beabstandeten Fahrzeugrad (18) ebenfalls durch ein solches Treibmittel (46) verbunden. In einer nicht dargestellten Abwandlung kann ein Motor/Generator (40,41) direkt an einem Fahrzeugrad (18) angeordnet sein. Er kann hierfür z.B. als Radnabenmotor oder in anderer geeigneter Weise ausgebildet sein.

Die elektrische Antriebs- und Bremseinheit (36) weist ein dem elektrischen Motor/Generator (40,41) jeweils vorgeschaltetes Getriebe (43) auf. Das Getriebe (43) weist bei der Ausführungsform von Figur 2 mit dem zentralen Motor/Generator (40,41) ein Differential (44) auf, welches eingangsseitig mit der Abtriebswelle des Motors/Generators (40,41) und abtriebsseitig mit den Treibmitteln (46) verbunden ist. Das Differential (44) kann momentensensierend sein und/oder kann eine Differentialsperre aufweisen. Das Getriebe (43) kann mit der Steuerung (37) verbunden und von dieser gesteuert sein.

Das Getriebe (43) kann ferner ein Schaltgetriebe (45) aufweisen. Dieses kann zwei oder mehr Getriebestufen zur Untersetzung der Drehzahl des Motors/Generators (40,41) aufweisen. Die Getriebestufen können in beliebiger Weise bedienergeführt oder automatisch geschaltet werden. Das Schaltgetriebe (45) kann z.B. als Automatikgetriebe ausgebildet sein. Das Schaltgetriebe (45) kann bei einer Einzelanordnung vom Motor/Generator (40,41) in der Variante von Figur 2 einem Differential (44) vorgeschaltet sein. Bei der Variante von Figur 3 ist jedem Motor/Generator (40,41) abtriebsseitig ein Schaltgetriebe (45) vorgeschaltet.

Das Getriebe (43), insbesondere das Schaltgetriebe (45), kann zum Entkuppeln und Ankuppeln von einem Motor/Generator (40,41) von und an ein Fahrzeugrad (18) benutzt werden. Hierfür kann z.B. ein Freilauf vorhanden sein. Alternativ oder zusätzlich kann die elektrische Antriebs- und Bremseinheit (36) eine von der Steuerung schaltbare Kupplung (64) aufweisen. Ein Entkuppeln kann z.B. bei niedrigen Fahrgeschwindigkeiten von z.B. ca. 25 km/h stattfinden.

Die elektrische Antriebs- und Bremseinheit (36) mit ihren Komponenten kann in beliebig geeigneter Weise am Fahrzeuganhänger (1), z.B. am Chassis (14) und/oder am Boden des Aufbau (61) angeordnet und abgestützt sein. Eine Befestigung und Abstützung kann auch an einer Fahrzeugachse (17), insbesondere an deren Achskörper, erfolgen.

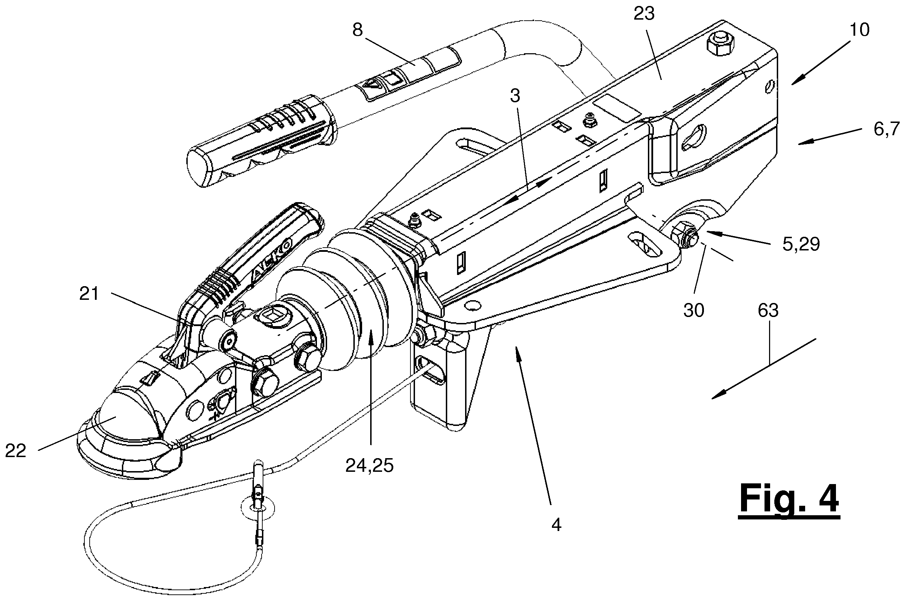

Die Auflaufeinrichtung (4) und die Erfassungseinrichtung (10) sind in Figur 4 bis 14 näher dargestellt. Die Auflaufeinrichtung (4) weist ein Gehäuse (23) auf, welches mit der Deichsel (16) verbindbar bzw. verbunden ist. An der Auflaufeinrichtung (4) und an deren Gehäuse (23) ist die Kraftfahrzeuganhängekupplung (21) beweglich angeordnet. Sie ist dabei linear in und gegen die Zugrichtung (63) bzw. entlang der Längsachse (3) des Kraftfahrzeuganhängers (1) beweglich.

Die Kraftfahrzeuganhängekupplung (21) ist an ihrem rückwärtigen Ende mit einem Schlepporgan (25) fest verbunden. Das Schlepporgan (25) weist ein hohles Zugrohr (26) und einen Dämpfer (27) auf, der im Zugrohr (26) angeordnet ist und z.B. als federbelasteter Stoßdämpfer ausgebildet ist.

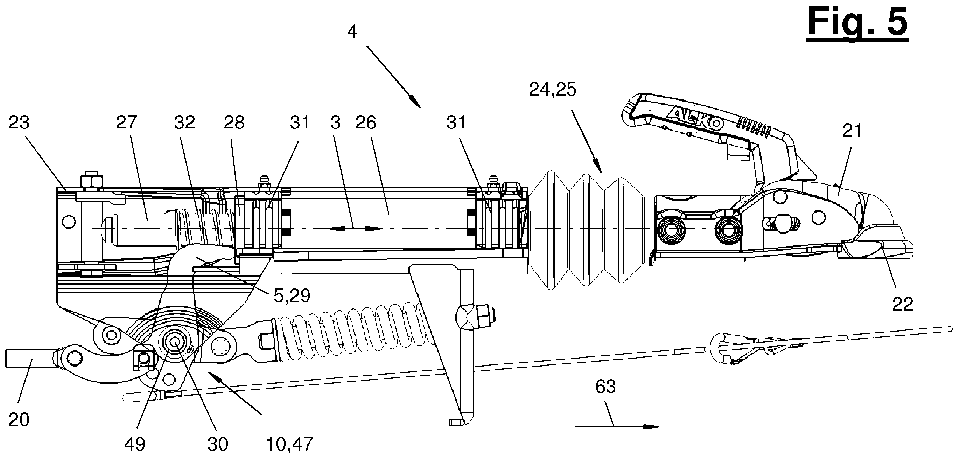

Der Dämpfer (27) ist an seinem vorderen Ende mit der Zugstange (26) oder mit der Kraftfahrzeuganhängekupplung (21) fest verbunden. Das vordere Ende kann am austretenden Ende des beweglichen Dämpferelements, z.B. der Kolbenstange des Dämpfzylinders, angeordnet sein. Das hintere Dämpferende ist über einen Stützbolzen mit dem Gehäuse (23) relativ ortsfest verbunden. Der am inneren Kolbenstangenende angeordnete Kolben teilt den Zylinderinnenraum in zwei Arbeitskammern. Gemäß Figur 5 kann auf dem in Zugrichtung (63) rückwärtigen Ende eine Feder (32) angeordnet sein. Diese kann als Anschlagfeder für das Zugrohr (26) dienen. Bei einem federbelasteten Dämpfer (27) kann die Feder (32) entfallen.

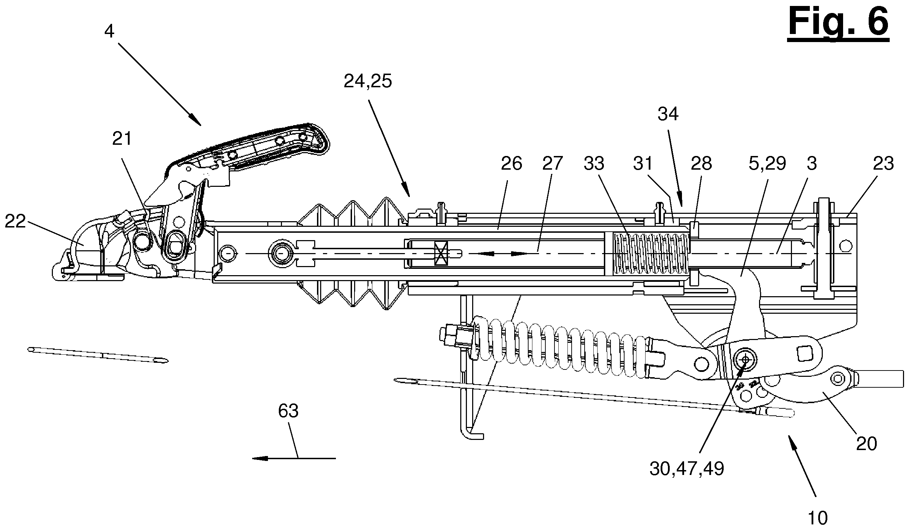

Das Zugrohr (26) ist mittels Lagern (31) axial beweglich am Gehäuse (23) gelagert. Am rückwärtigen Ende weist das Zugrohr (26) ein seitlich abstehendes Anschlagelement (28) auf, z.B. eine quer liegende Anschlagplatte. Die Anschlagfeder (32) stützt sich an diesem Anschlagelement (28) und bewirkt zusammen mit dem gefederten Dämpfer eine Rückstellung des eingefahrenen Zugrohrs (26) und der Kraftfahrzeuganhängekupplung (21). Ferner kann auf dem Dämpfer (27), insbesondere dem Zylindermantel, eine weitere Feder (33) angeordnet sein, die sich zwischen dem Anschlagelement (28) und einem am Dämpfer (27) angeordneten und somit gestellfesten Bund befindet. Figur 6 bis 8 zeigen diese Anordnung.

Der als Umlenkhebel (29) ausgebildete Auflaufbremsaktuator (5) ist unterhalb des Zugrohrs (26) am Gehäuse (23) um eine im mittleren Hebelbereich angeordnete Achse (30) schwenkbar gelagert. Der oberhalb der Achse (30) angeordnete und abgebogene Hebelarm wirkt an seinem Ende mit dem Anschlagelement (28) zusammen. Er kann hier in allen Betriebsstellungen permanent anliegen. Alternativ kann bei entlasteter Auflaufeinrichtung (4) und entlasteten Radbremsen (19) ein Abstand vorhanden sein. Der unterhalb der Achse (30) angeordnete Hebelarm ist an seinem Endbereich gelenkig mit dem Bremsübertrager (20) verbunden.

Bei einem negativen Beschleunigen bzw. Bremsen des Zugkraftfahrzeugs (2) im Zug- und Gespannbetrieb läuft der Kraftfahrzeuganhänger (1) auf das Zugkraftfahrzeug (2) auf, wodurch die Kraftfahrzeuganhängekupplung (21) und das Zugrohr (26) entgegen der Zugrichtung (63) bewegt und in das Gehäuse (23) eingeschoben werden. Diese Einfahrbewegung wird auf den Bremskraftaktuator (5) und auf den Bremsübertrager (20) übertragen und als Betätigungsbewegung auf die Radbremsen (19) geleitet.

Hierbei gibt es auf den Bremsbetätigungsweg ein Bewegungsspiel zwischen dem Bremskraftaktuator (5), dem Bremskraftübertrager (20) und den Radbremsen (19). Nach Überwinden dieses Bewegungsspiels werden die Radbremsen (19) tatsächlich betätigt und die Bremselemente, z.B. Bremsbacken, angelegt. Das Bewegungsspiel kann durch den vorgenannten Abstand des Bremskraftaktuators (5) vom Anschlagelement (28) ggf. vergrößert werden.

Nach Beendigung des Bremsvorgangs fahren die Kraftfahrzeuganhängekupplung (21) und das Zugrohr (26) unter Einwirkung der Anschlagfeder (32) und/oder des Zugkraftfahrzeugs (2) wieder in Zugrichtung (63) aus. Sie können dabei eine Vorgabestellung einnehmen.

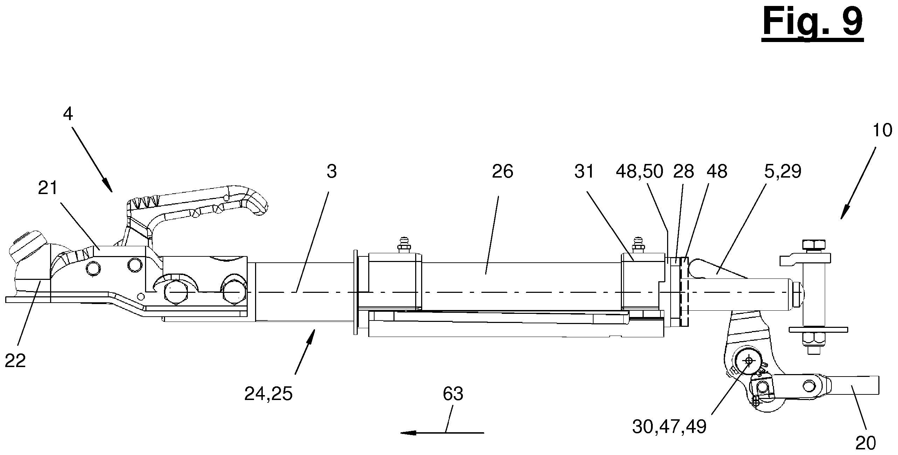

Die Vorgabestellung kann z.B. gemäß Figur 9 eine Anschlagstellung an einem relativ ortsfesten Teil (31) des Gehäuses (23), z.B. am hinteren Zugstangenlager, sein. Bei Anordnung einer Feder (33) kann die Vorgabestellung eine in Figur 6 gezeigte Neutralstellung (34) sein, in der das Anschlagelement (28) von dem besagten relativ ortsfesten Teil (31) bzw. dem Lager axial beabstandet ist. Die Feder (33) wirkt hierbei als Zuglastfeder mit einer vorgebbaren Kraft.

Beim positiven Beschleunigen bzw. Anzugbeschleunigen des Zugkraftfahrzeugs (2) wird eine Zugkraft in Fahrtrichtung bzw. Zugrichtung (63) auf die Kraftfahrzeuganhängekupplung (21) und das damit fest verbundene Zugrohr (26) ausgeübt. Diese Zugkraft bewegt das Anschlagelement (28) bei Einnahme einer Neutralstellung (34) in Zugrichtung (63) und dann in Kontakt sowie in Anschlag mit dem besagten relativ ortsfesten Teil (31). Bei der anderen Variante der Vorgabestellung wird das bereits am ortsfesten Teil (31) anliegende Anschlagelement (28) ohne signifikante Axialbewegung mit erhöhter Kraft gegen das relativ ortsfeste Teil (31) gedrückt.

Die Erfassungseinrichtung (10) weist in den gezeigten Ausführungsbeispielen von Figur 4 bis 13 einen Wegmesser (47) und einen Kraftmesser (48) auf. Mit dem Wegmesser wird der bei den verschiedenen Fahrbetriebszuständen, insbesondere beim negativen und positiven Beschleunigen, auftretende Weg der Kraftfahrzeuganhängekupplung (21) und eines damit verbundenen bewegten Teils (24) der Auflaufeinrichtung (4) als Führungsgröße aufgenommen. Das bewegte Teil (24) ist bei den Ausführungsbeispielen von Figur 4 bis 13 der Umlenkhebel (29).

Bei dem in Figur 5 bis 7 verdeutlichten, nicht unter Anspruch 1 fallenden Ausführungsbeispiel ist nur ein Wegmesser (47) vorhanden, der dem Umlenkhebel (29) zugeordnet ist. Der Wegmesser (47) ist z.B. als Drehgeber (49) auf der Achse (30) angeordnet und erfasst die Schwenk- und Winkelbewegungen des Umlenkhebels (29).

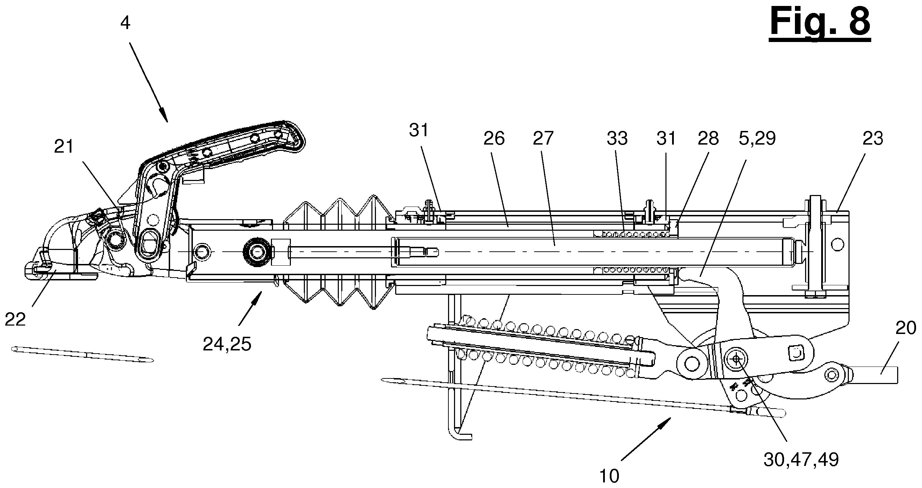

Bei Figur 8 bis 13 weist die Erfassungseinrichtung (10) zusätzlich zum Wegmesser (47) bzw. Drehgeber (49) einen Kraftmesser (48) auf. Der Kraftmesser (48) ist z.B. dem Zugrohr (26), insbesondere dessen Anschlagelement (28), zugeordnet. Diese bilden in dieser Ausführungsform das besagte bewegte Teil (24). Mit dem Kraftmesser (48) wird die bei den besagten verschiedenen Fahrbetriebszuständen eine an der Kraftfahrzeuganhängekupplung (21) und/oder am damit verbundenen bewegten Teil (24) einwirkende axiale Kraft als Führungsgröße aufgenommen.

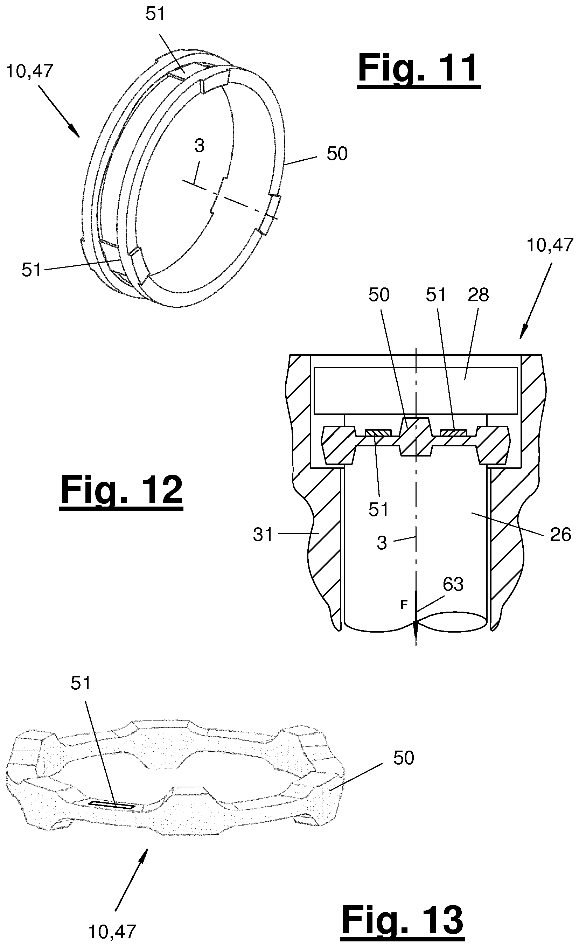

Der Kraftmesser (48) ist z.B. als in Axialrichtung verformbarer Messring (50) mit ein oder mehreren, bevorzugt verteilt am Ringumfang angeordneten Kraftsensoren (51) ausgebildet. Figur 11 bis 13 verdeutlichen verschiedene Ausführungsvarianten und werden nachfolgend beschrieben. Der Messring (50) ist auf dem Zugrohr (26) fest oder verschiebbar angeordnet bzw. aufgezogen und befindet sich in Zugrichtung (63) vor dem Anschlagelement (28). Er wird in vorderer Anschlagstellung des Zugrohrs (26) zwischen dem Anschlagelement (28) und dem besagten relativ ortsfesten Teil (31) eingespannt und misst die dabei auftretenden axialen Kräfte.

Der Wegmesser und der Kraftmesser (48) emittieren jeweils elektrische Signale. Sie sind mit der Steuerung (37) verbunden, welche die Messsignale auswertet und die elektrische Antriebs- und Bremseinheit (36) entsprechend ansteuert sowie deren Leistungsabgabe regelt.

In der Ausführungs von Figur 5 bis 8 nimmt das Zugrohr (26) und sein Anschlagelement (28) die besagte Neutralstellung (34) im beschleunigungsfreien oder beschleunigungsarmen Zug- und Gespannbetrieb ein. Der Umlenkhebel (29) oder eine andere Art von Auflaufbremsaktuator (5) liegt am Anschlagelement (28) an. Die beispielsweise vorhandene Zuglastfeder (33) hält die Neutralstellung (34) mit einer Federkraft von z.B. 100 N oder mehr.

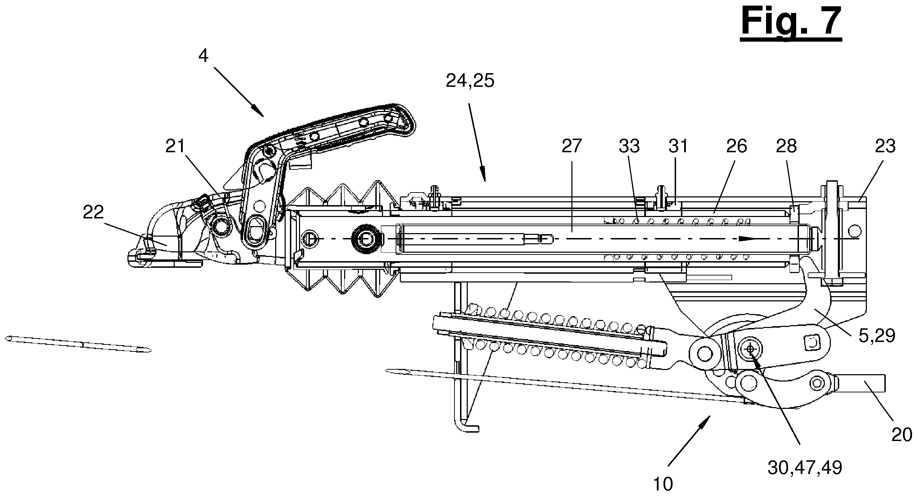

Figur 7 zeigt die Auflauf- und Einfahrstellung bei einem negativen Beschleunigen bzw. Bremsen des Zugkraftfahrzeugs (2). Die vom einfahrenden Anschlagelement (28) ausgelöste Drehbewegung des Umlenkhebels (29) wird mit dem Drehgeber (49) aufgenommen und an die Steuerung (37) signalisiert. Die Steuerung (37) löst ein elektrisches Bremsen durch die ein oder mehreren elektrischen Generatoren (41) und ggf. die Rekuperationsbremse (42) aus. Die elektrische Leistungsabgabe und das elektrische Bremsmoment werden derart geregelt, dass die negative Beschleunigung bzw. die Bremswirkung des Kraftfahrzeuganhängers (1) gleich oder größer als beim Zugkraftfahrzeug (2) ist und die bewegliche Kraftfahrzeuganhängekupplung (21) mit dem Zugrohr (26) wieder ausfahren. Diese Ausfahrbewegung wird über den Drehgeber (49) erfasst, wobei mit Erreichen der Neutralstellung (34) die über die Kraftfahrzeuganhängekupplung (21) am Zugkraftfahrzeug (2) einwirkende Zugkraft den gewünschten Wert von "0" oder einen anderen Vorgabewert, von z.B. 100 n oder mehr, einnimmt.

Figur 8 zeigt den anderen Fall einer positiven Beschleunigung bzw. Anzugbeschleunigung des Zugkraftfahrzeugs (2), wodurch die Kraftfahrzeuganhängekupplung (21) ausgefahren wird. Hierbei wird das Anschlagelement (28) in Zugrichtung (63) angezogen und verlässt die Neutralstellung (34). Diese Ausfahrbewegung wird ebenfalls durch den Drehgeber (49) sensiert, wobei in Reaktion hierauf die Steuerung (37) den oder die elektrischen Motoren (40) ansteuert und deren antreibende Leistungsabgabe regelt. Dabei beschleunigt der Kraftfahrzeuganhänger (1) stärker als das Zugkraftfahrzeug (2), wodurch die Kraftfahrzeuganhängekupplung (21) mit dem Zugrohr (26) wieder bis zur Neutralstellung (34) eingefahren wird und die am Zugkraftfahrzeug (2) einwirkende Zugkraft den gewünschten Wert von "0" oder einen anderen Vorgabewert einnimmt.

Diese Regelung der Leistungsabgabe der elektrischen Antriebs- und Bremseinheit (36) erfolgt derart schnell und innerhalb des Bewegungsspiels der Betriebsbremse (6), dass der Kraftfahrzeuganhänger (1) nur mit der elektrischen Bremsung, insbesondere der Rekuperationsbremse (42), gebremst werden kann und die Radbremsen (19) keine Bremswirkung entfalten. Zugleich wird mit der Rekuperationsbremse der Energiespeicher (35) wieder aufgeladen.

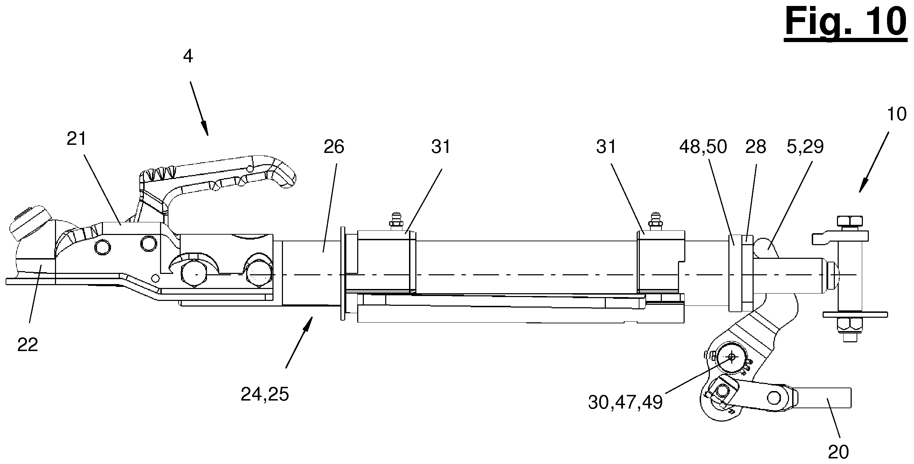

Bei der Variante von Figur 9 und 10 ist die Vorgabestellung im beschleunigungsfreien Zug- und Gespannbetrieb die in Figur 9 gezeigte Anschlagsstellung am relativ ortsfesten Teil (31).

Wenn aus dieser Vorgabestellung eine positive Beschleunigung bzw. Anzugbeschleunigung des Zugfahrzeugs (2) erfolgt und eine Zugkraft entwickelt wird, welche die Kraftfahrzeuganhängekupplung (21) und das Zugrohr (26) in Zugrichtung (63) bewegen will, wird dies als Krafterhöhung über den Messring (50) erfasst. Die Steuerung (37) regelt die ein oder mehreren elektrischen Motoren (40) derart, dass durch entsprechende Beschleunigung des Kraftfahrzeuganhängers (1) die erwähnte Zugkraft wieder auf "0" oder einen anderen Vorgabewert reduziert wird.

Figur 10 zeigt den Auflauf- und Bremsfall, in dem bei einer negativen Beschleunigung die Kraftfahrzeuganhängekupplung (21) und das Zugrohr (26) einfahren. Der Messring (50) erfasst keine Kraft mehr. Andererseits nimmt der Drehgeber (49) in gleicher Weise wie im ersten Ausführungsbeispiel die Drehbewegung des Umlenkhebels (29) auf. Die Steuerung (37) regelt dann die elektrische Bremsung bzw. die Rekuperationsbremse (42) derart, dass durch ein bremsbedingtes Ausfahren der Kraftfahrzeuganhängekupplung (21) und des Zugrohrs (26) die Vorgabestellung wieder eingenommen wird und die an der Anhängekupplung (21) wirkende Zugkraft auf den Wert "0" oder auf einen anderen Vorgabewert abfällt.

Die Anzugbeschleunigung wird bei dieser Ausführungsform durch den Messring (50) oder eine andere Art von Kraftmesser (48) erfasst und die Bremsung durch den Wegmesser (47), insbesondere den Drehgeber (49), erfasst. Die Messsignale von Wegmesser (47) und Kraftmesser (48) können zu Plausibilisierungszwecken miteinander in Beziehung gesetzt werden. Beim Bremsen liegt kein Kraftsignal und nur ein Wegsignal an. Bei Anzugbeschleunigen liegt umgekehrt kein Wegsignal und nur ein Kraftsignal an. Bei beschleunigungsfreier Fahrt im Zug- und Gespannbetrieb kann eine vorgegebene Zugkraft bestehen, so dass auch in diesem Fall ein Kraftsignal anliegt. Andere Signalverhältnisse deuten auf einen Fehler hin. Hierüber kann z.B. ein evtl. Ausfall eines Kraft- oder Wegmessers festgestellt werden.

Figur 9 zeigt außerdem eine Variante zu diesem Ausführungsbeispiel, in der an der anderen und gegen die Zugrichtung (63) weisenden Seite des Anschlagelements (28) ein weiterer Kraftmesser (48), z.B. ein weiterer Messring, angeordnet ist. Beim Anzugbeschleunigen funktioniert der zwischen Anschlagelement (28) und relativ festem Teil (31) eingespannte Messring (50) in der vorbeschriebenen Weise.

Beim Bremsen wird die Einfahrbewegung der Kraftfahrzeuganhängekupplung (21) und des Zugrohrs (26) als Kraftanstieg von dem zweiten Kraftmesser (48) detektiert. Das elektrische Bremsen bzw. das Rekuperationsbremsen wird hierbei über das Kraftmesssignal als Führungsgröße geregelt.

Figur 11 bis 13 zeigen verschiedene Varianten eines Messrings (50). Dieser ist in Figur 11 als ein im mittleren Bereich des Mantels verdünnter Ring ausgeführt, der an den jeweiligen Stirnseiten Vorsprünge aufweist, welche definierte Anlagestellen des Messrings (50) in der Einspannstellung zwischen dem Anschlagelement (28) und dem relativ ortsfesten Teil (31) bieten. Die Vorsprünge an der Vorder- und Rückseite können axial miteinander fluchten, wobei dazwischen im verdünnten Ringmantelbereich jeweils ein Kraftsensor (51) angeordnet ist. Dieser nimmt die beim Stauchen auftretende äußere axiale Presskraft auf und kann in geeigneter Weise, z.B. als Dehnungsmesstreifen ausgebildet sein.

In der Variante von Figur 12 ist ein Messring (50) dargestellt, der einen in Axialrichtung dünnen stegartigen Ringkörper mit davon in beidseits in Axialrichtung abstehenden Vorsprüngen aufweist. Figur 13 zeigt den in Figur 12 im Längsschnitt dargestellten Messring (50) in einer perspektivischen Ansicht.

Die am Umfang verteilten Vorsprünge fluchten wiederum in Axialrichtung, wobei sie aber in Umfangsrichtung verteilt abwechselnd unterschiedlich weit vorstehen. Die beidseits jeweils am weitesten axial vorstehenden Vorsprünge bilden die Anschläge für das Anschlagelement (28) und das relativ ortsfeste Teil (31), wobei in Anschlagstellung der dünne Ringsteg verformt wird. Diese Verformung und die verursachende Kraft werden mittels ein oder mehreren Kraftsensoren (51), z.B. Dehnmessstreifen, auf den verdünnten Ringstegteilen aufgenommen. Die weniger weit vorstehenden Vorsprünge dienen jeweils als Kraftbegrenzungsanschläge und als Überlastsicherung.

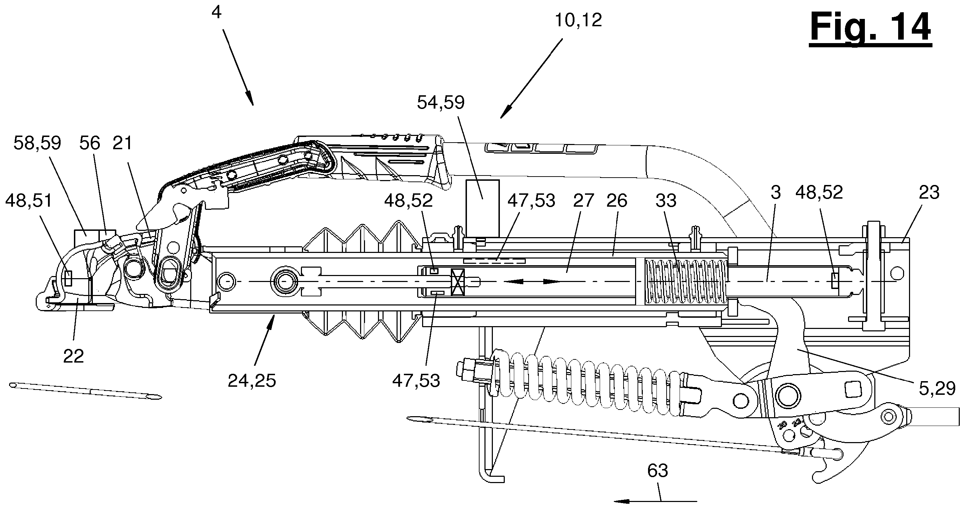

Figur 14 zeigt weitere Variationsmöglichkeiten der Erfassungseinrichtung (10) zur Erfassung von physikalischen Bewegungsparametern des Kraftfahrzeuganhängers (1). Diese Varianten können einzeln oder gemeinsam benutzt werden. Sie können außerdem zusätzlich oder alternativ zu den vorbeschriebenen Weg- und Kraftmessern (47,48) eingesetzt werden.

Ein Wegmesser (47) kann z.B. durch einen Wegsensor (53) gebildet sein, der im Dämpfzylinder (27) und im Bereich der Kolbenstange und/oder des Kolbens angeordnet ist und deren Weg aufnimmt. Dieser Weg repräsentiert den Einfahr- und Ausfahrweg der Kraftfahrzeuganhängekupplung (21) und der damit verbundenen Kolbenstange relativ zu dem gehäusefesten Zylindermantel.

Ein anderer Wegsensor (53) kann im Freiraum zwischen dem Dämpfzylinder (27) und dem Zugrohr (26) angeordnet sein. Ferner ist eine nicht dargestellte Anordnung eines Wegmessers (47), insbesondere Wegsensors (53), zwischen dem Gehäuse (23) und dem Zugrohr (26) oder einer massiven Zugstange oder der Kraftfahrzeuganhängekupplung (21) möglich. In diesen Fällen ist das bewegte Teil (24) das Schlepporgan (25), insbesondere das Zugrohr (26) bzw. eine massive Zugstange und der Dämpfer (27).

Für den Kraftmesser (48) gibt es ebenfalls mehrere Alternativen. Der Kraftmesser (48) kann z.B. von zwei Drucksensoren (52) gebildet werden, die in den vom Kolben abgeteilten Arbeitskammern des Dämpfzylinders (27) angeordnet sind. Hierüber wird der Innendruck des Dämpfzylinders (27), insbesondere der Differenzdruck zwischen den Arbeitskammern gemessen, welcher den Einfahr- und Ausfahrweg der Kolbenstange und des Kolbens des Dämpfers (27) repräsentiert.

An der Kraftfahrzeuganhängekupplung (21) kann ebenfalls ein Kraftmesser (48) angeordnet sein. Dieser kann z.B. einen Kraftsensor (51) aufweisen, der in oder an der Kupplungspfanne (22) einzeln oder bevorzugt mehrfach angeordnet ist. Hierüber kann die bei den verschiedenen Fahrzuständen und Beschleunigungen zwischen dem Kugelkopf und der Kupplungspfanne (22) wirkende Kraft gemessen werden, insbesondere in Bewegungsrichtung der Kraftfahrzeuganhängekupplung (21) und des Schlepporgans (25) .

In einer nicht dargestellten Variante kann ein Kraftsensor (51) sich z.B. an der Anbindungsstelle zwischen dem Dämpfer (27) und dem Gehäuse (23) befinden. In einer anderen nicht dargestellten Variante kann ein Kraftsensor am Mantel des Zugrohrs (26) oder einer massiven Zugstange oder auch am Gehäuse der Kraftfahrzeuganhängekupplung (21) angeordnet sein.

Figur 14 verdeutlicht außerdem andere Möglichkeiten zur Erfassung von physikalischen Bewegungsparametern des Kraftfahrzeuganhängers (1) im Zug- und Gespannbetrieb. Diese Erfassungsmöglichkeiten können zusätzlich zu den vorgenannten Beispielen mit einem Wegmesser (47) und einem Kraftmesser (48) eingesetzt werden.

Eine Erfassungsmöglichkeit bietet ein Abstandssensor (54), der den Abstand zwischen dem Kraftfahrzeuganhänger (1) und dem Zugfahrzeug (2) misst und der an der Auflaufeinrichtung (4), insbesondere an deren Gehäuse (23), angeordnet ist. Durch eine Abstandsänderung können negative und positive Beschleunigungen und ein dadurch bedingtes Ein- und Ausfahren der Kraftfahrzeuganhängekupplung (21) erfasst werden. Ein Abstandssensor (54) kann z.B. als elektronische und digitale Messkamera, als Lasersensor oder in beliebig anderer Weise ausgebildet sein.

Eine weitere Erfassungsmöglichkeit besteht über die direkte Erfassung von Beschleunigung mittels eines oder mehrerer Beschleunigungssensoren (56). Hierdurch kann insbesondere eine Beschleunigungsdifferenz zwischen Zugkraftfahrzeug (2) und Kraftfahrzeuganhänger (1) erfasst werden. Zur Erfassung der Beschleunigung des Zugkraftfahrzeugs (2) kann z.B. ein Beschleunigungssensor (56) an der Kraftfahrzeuganhängekupplung (21) angeordnet sein. Dieser nimmt Längsbeschleunigungen in Zugrichtung (63) bzw. in Richtung der Längsachse (3) auf. Für die Erfassung der Beschleunigung des Kraftfahrzeuganhängers (1) kann ein weiterer Beschleunigungssensor (56) am Gestell (23) oder einem anderen ortsfesten Teil der Auflaufeinrichtung (4) oder auch alternativ am Chassis (14) angeordnet sein. Figur 2 verdeutlicht eine solche Anordnung mit einem Beschleunigungssensor (56) am hinteren Anhängerbereich.

Mit der Detektionseinrichtung (11) werden ebenfalls physikalische Bewegungsparameter des Kraftfahrzeuganhängers (1) und seiner Komponenten aufgenommen. Die Detektionseinrichtung (11) kann einen oder mehrere Sensoren aufweisen. Diese können außerhalb der Auflaufeinrichtung (4) und an anderen geeigneten Stellen des Kraftfahrzeuganhängers (1), insbesondere des Chassis (14), anordenbar oder angeordnet sein.

Die Detektionseinrichtung (11) kann z.B. einen Neigungssensor (55) aufweisen, mit dem eine Neigung des Kraftfahrzeuganhängers (1) gegen die Horizontale beim Befahren einer Gefällestrecke detektiert wird. Die Detektionseinrichtung (11) kann ferner den vorerwähnten weiteren Beschleunigungssensor (56) aufweisen.

Sie kann auch einen Sensor (56') beinhalten, mit dem Schlingerbewegungen des Kraftfahrzeuganhängers (1) detektiert werden können. Ein solcher Sensor (56') kann z.B. als Beschleunigungssensor zur Erfassung von Querbeschleunigungen und ggf. auch Längsbeschleunigungen ausgebildet sein. In einer alternativen oder zusätzlichen Ausführung ist eine Sensorgestaltung als Gierratensensor oder ESP-Sensor möglich.

Die Detektionseinrichtung (11) kann ferner einen oder mehrere Radsensoren (57) umfassen, welche die Drehzahl und Drehrichtung sowie ggf. das Moment eines zugehörigen Fahrzeugsrads (18) aufnehmen.

Die Detektionseinrichtung (11) kann außerdem einen Radbremssensor (57') aufweisen, der in oder an einer Radbremse (19) angeordnet ist. Ein Radbremssensor (57') kann z.B. ein Lüftungsspiel der Betätigungsmechanik oder der beweglichen Bremselemente, insbesondere Bremsbacken, einer Radbremse (19) detektieren. Alternativ oder zusätzlich ist der Eintritt einer Bremswirkung der Radbremse (19) detektierbar, z.B. über das Feststellen eines Berührungskontaktes zwischen Bremselementen, insbesondere Bremsbacken und Bremstrommel bzw. Bremsscheibe.

Die Detektionseinrichtung (11) kann ferner ähnliche Wegmesser (47) und/oder Kraftmesser (48) wie die Erfassungseinrichtung (10) aufweisen. Ein Wegmesser (47) mit einem Wegsensor (53) kann z.B. an geeigneter Stelle des Bremsübertragers (20) angeordnet sein, z.B. am Wagbalken und/oder an den Bowdenzügen oder an anderer Stelle. In einer nicht dargestellten Ausführungsform ist auch ein Kraftmesser (48) mit einem Kraftsensor möglich, der z.B. am Bremsübertrager (20) und/oder an einer Radbremse (19), insbesondere an deren Zuspanneinrichtung, angeordnet ist. Ein Kraftsensor kann außerdem am Chassis (14), insbesondere an der Deichsel (16) und/oder an einem Längsträger (15) angeordnet sein.

Die elektrische Antriebs- und Bremseinrichtung (9) kann weitere Funktionen haben. Sie kann z.B. als Schlingerbremse zum Dämpfen und Beseitigen von Schlingerbewegungen des Kraftfahrzeuganhängers (1) im Zug- und Gespannbetrieb eingesetzt werden. Hierbei wird der Kraftfahrzeuganhänger (1) derart elektrisch gebremst, bis die vom Sensor (56') detektierten Schlingerbewegungen abgeklungen sind. Für die Schlingerbremse sind alle vorbeschriebenen Varianten der elektrischen Antriebs- und Bremseinheit (36) einsetzbar. Besondere Vorteile bestehen bei der Variante von Figur 3, bei der die linken und rechten Fahrzeugräder (18) unterschiedlich und unabhängig voneinander durch die jeweils einzeln zugeordneten Motoren/Generatoren (40,41) elektrisch gebremst werden können.

Die elektrische Antriebs- und Bremseinrichtung (9) kann außerdem in einer bevorzugt zusätzlichen Funktion als Rangierantrieb (13) ausgebildet sein bzw. eingesetzt werden. Hiermit kann der Kraftfahrzeuganhänger (1) im abgekoppelten Zustand mittels einer mit der Steuerung (37) verbundenen Bedienungseinrichtung (60) bewegt und gezielt vorwärts und rückwärts sowie in beliebigen Kurven gefahren werden. Das Schaltgetriebe (45) ist für eine langsame Fahrbewegung bzw. Schleichfahrt durch Schalten einer besonders stark untersetzten Getriebestufe von Vorteil.

In der Funktion als Rangierantrieb (13) kann die elektrische Antriebs- und Bremseinrichtung (9) eine weitere Sensorik (12) aufweisen. Diese kann ebenfalls einen oder mehrere Sensoren aufweisen. Sie kann z.B. einen Abstandsensor (58) umfassen, der an geeigneter Stelle des Kraftfahrzeuganhängers (1) angeordnet ist, z.B. am Heck gemäß Figur 1 bis 3 und/oder an der Kraftfahrzeuganhängekupplung (21) gemäß Figur 14.

Der Abstandssensor (58) kann in beliebig geeigneter Weise ausgebildet sein. Insbesondere ist eine Ausbildung als digitale Kamera (59) möglich. Der Abstandsensor (58) kann als Parksensor zur Erfassung und ggf. Anzeige von etwaigen Hindernissen auf dem Rangierfahrweg dienen. Ein frontseitiger Abstandsensor (58) kann zum Annähern und automatischen Rangieren in eine Ankuppelposition an der Anhängekupplung des Zugfahrzeugs (2) eingesetzt werden.

Die Sensorik (12) kann ebenfalls einen Radsensor aufweisen oder auf die Radsensoren (57) der Detektionseinrichtung (11) zurückgreifen. Für die Rangierfahrt können die Drehrichtungen und Drehgeschwindigkeiten der linken und rechten Fahrzeugräder (18) aufgenommen werden. Die Fahrzeugräder (18) können dabei zur Einhaltung einer vorgegebenen Fahrtrichtung bzw. Kurvenfahrt unter Kompensation eventueller Hindernisse oder Leistungsunterschiede miteinander synchronisiert und in der jeweiligen Rollgeschwindigkeit geregelt werden.

Für einen Rangierantrieb (13) sind alle Ausführungsvarianten der elektrischen Antriebs- und Bremseinrichtung (9) nutzbar. Bei der Variante von Figur 2 mit einem zentralen und die linken und rechten Räder antreibenden Motor/Generator (40,41) kann ein Lenken in der Rangierfahrt manuell durch den Bediener und eine geeignete Seitenbewegung der Deichsel (16) erfolgen. Für eine komplett fernsteuerbare Rangierfahrt ist die Ausführungsvariante von Figur 3 geeignet, bei der die linken und rechten Fahrzeugräder (18) separat und eigenständig angetrieben werden können. Die Steuerung (37) kann in allen Varianten die Steuerungsaufgaben für die Rangierfahrt übernehmen.

Die verschiedenen Sensoren der Erfassungseinrichtung (10), der Detektionseinrichtung (11) und der Sensorik (12) können bedarfsweise und dabei in beliebiger Zahl und Kombination vorhanden sein. Sie sind jeweils mittels Leitungen (62) mit der Steuerung (37) verbunden. Dies kann eine drahtgebundene oder drahtlose Leitungsverbindung sein.

Figur 15 und 16 zeigen Varianten des Fahrzeuganhängers (1) und des Zugfahrzeugs (2). Das Zugfahrzeug (2) ist hierbei als ein mit Muskelkraft des Fahrers betriebenes Tretrad (65,66) ausgebildet. In Figur 15 ist eine Variante des Tretrads (65) in der Ausbildung als Fahrrad gezeigt. Figur 16 zeigt eines andere Ausführung des Tretrads (66) als Liegendrad. Auch eine Ausbildung als Dreirad, Tandemrad oder dgl. ist möglich.

In den gezeigten Varianten kann das Tretrad (65,66) jeweils einen Rahmen (69), zwei oder mehr Räder und mindestens einen Sitz, z.B. in Form eines Sattels oder einer Sitzschale oder Liegeschale, aufweisen. Ferner kann eine Tretkurbel mit Pedalen und ein Ketten- oder Riementrieb zur Übertragung der Tretkraft auf zumindest ein angetriebenes Rad vorhanden sein. Die Tretkraft kann üblicherweise mit den Beinen eines Fahrers aufgebracht werden. Alternativ oder zusätzlich ist ein Aufbringen der Tretkraft mit den Armen möglich.

Die Fahrzeuganhängekupplung (21) kann wie in den vorherigen Ausführungsbeispielen als Kugelkopfkupplung oder in anderer Weise ausgebildet sein. Das zugfahrzeugseitige Kupplungselement ist in der Variante von Figur 15 an einer Sattelstütze (70) angeordnet. Figur 16 zeigt die Variante einer Anordnung an einer Radachse (71). Ansonsten ist auch eine Anordnung an einer anderen Stelle am Rahmen (69) des Tretrads (65,66) möglich.

Der Fahrzeuganhänger (1) ist in Figur 15 und 16 als Tretradanhänger (67), z.B. Lastenanhänger, ausgebildet. Dieser kann für den Lasten- oder Gütertransport z.B. einen Pritschen- oder Kastenaufbau oder eine Plattform aufweisen. Alternativ ist auch ein Tretradanhänger für den Personentransport mit ein oder mehreren Sitzen möglich. Der Fahrzeuganhänger (1), insbesondere Tretradanhänger (67), ist in der gezeigten Ausführungsform mehrachsig ausgebildet und weist eine gerade oder geschwungene Deichsel (16) auf, die hier als Schwenkdeichsel (68) mit einem Drehschemel ausgebildet und mit der vorderen lenkbaren Achse und deren Rädern verbunden ist. Die Deichselausbildung mit der aufrechten Schwenkachse ist in den schematischen Darstellungen nicht näher gezeigt. Alternativ sind eine starre Deichsel und eine einzelne Achse oder eine Tandemachse möglich.

Die Auflaufeinrichtung (4) und die hier angeordnete Erfassungseinrichtung (10) können wie in den vorbeschriebenen Ausführungsbeispielen am vorderen Deichselende und nahe an der Fahrzeuganhängekupplung (21), insbesondere an der Kupplungspfanne (22), angeordnet sein. Figur 15 und 16 zeigen eine alternative Anordnung an einem anderen und z.B. hinteren Deichselbereich. Die Auflaufeinrichtung (4), die Erfassungseinrichtung (10) und die elektrische Antriebs- und Bremseinrichtung (9) können entsprechend den vorbeschriebenen Ausführungsbeispielen ausgebildet sein. Sie können dabei auf die für ein Tretrad (65,66) üblicherweise geringeren Anhängergewichte ausgelegt sein.

Die Treträder (65,66) von Figur 15 und 16 werden ausschließlich durch Muskelkraft des Fahrers angetrieben. In einer nicht dargestellten Ausführungsvariante kann zur Kraftunterstützung ein Elektroantrieb vorhanden sein. Dieser kann einen elektrischen Energiespeicher, insbesondere einen Akku oder eine Batterie, und zumindest einen elektrischen Antriebsmotor an geeigneter Stelle, z.B. an einer Radachse (71) oder der Tretkurbel, aufweisen. Mit einem solchen zusätzlichen elektrischen Fahrantrieb wird das Tretrad (65,66) zu einem sogenannten Pedelec und zu einem Zugkraftfahrzeug (2). Derartige Ausführungsformen können z.B. für den umweltschonenden Lastentransport in Städten eingesetzt werden.

### BEZUGSZEICHENLISTE

- 1: Fahrzeuganhänger, Kraftfahrzeuganhänger
- 2: Zugfahrzeug, Zugkraftfahrzeug
- 3: Längsachse
- 4: Auflaufeinrichtung
- 5: Auflaufbremsaktuator
- 6: Betriebsbremse
- 7: Feststellbremse
- 8: Handbremshebel
- 9: elektrische Antriebs- und Bremseinrichtung
- 10: Erfassungseinrichtung
- 11: Detektionseinrichtung
- 12: Sensorik für Rangierbetrieb
- 13: Rangierantrieb
- 14: Chassis
- 15: Längsträger
- 16: Deichsel
- 17: Fahrzeugachse
- 18: Fahrzeugrad
- 19: Radbremse
- 20: Bremskraftübertrager
- 21: Fahrzeuganhängekupplung, Kraftfahrzeuganhängekupplung, Kugelkopfkupplung
- 22: Kupplungspfanne
- 23: Gehäuse
- 24: bewegtes Teil der Auflaufeinrichtung
- 25: Schlepporgan
- 26: Zugstange, Zugrohr
- 27: Dämpfer
- 28: Anschlagelement, Anschlageplatte
- 29: Umlenkhebel
- 30: Achse
- 31: stationäres Teil, Lager
- 32: Feder, Anschlagfeder
- 33: Feder, Zuglastfeder
- 34: Neutralstellung
- 35: Energiespeicher
- 36: elektrische Antriebs- und Bremseinheit
- 37: Steuerung
- 38: Umrichter
- 39: Anschluss Energieversorgung
- 40: Motor
- 41: Generator
- 42: Rekuperationsbremse
- 43: Getriebe
- 44: Differential
- 45: Schaltgetriebe, Automatikgetriebe
- 46: Treibmittel
- 47: Wegmesser
- 48: Kraftmesser
- 49: Drehgeber
- 50: Messring
- 51: Sensor, Kraftsensor
- 52: Sensor, Drucksensor
- 53: Sensor, Wegsensor
- 54: Sensor, Abstandssensor
- 55: Sensor, Neigungssensor
- 56: Sensor, Beschleunigungssensor
- 56': Sensor, ESP-Sensor, Schlingersensor
- 57: Sensor, Radsensor
- 57': Sensor, Radbremssensor
- 58: Sensor, Abstandssensor
- 59: Sensor, Kamera
- 60: Bedienungseinrichtung Rangierantrieb
- 61: Aufbau
- 62: Leitung
- 63: Fahrtrichtung, Zugrichtung
- 64: Kupplung
- 65: Tretrad, Fahrrad
- 66: Tretrad, Liegendrad, Dreirad
- 67: Tretradanhänger, Lastenanhänger
- 68: Schwenkdeichsel
- 69: Rahmen
- 70: Sattelstütze
- 71: Radachse

## Patentansprüche

1. Elektrische Antriebs- und Bremseinrichtung für einen an ein Zugfahrzeug (2) ankuppelbaren, auflaufbremsbaren Fahrzeuganhänger (1), **dadurch gekennzeichnet, dass** die elektrische Antriebs- und Bremseinrichtung (9) aufweist
- eine für die Betätigung einer Betriebsbremse (6) des Fahrzeuganhängers (1) ausgebildete Auflaufeinrichtung (4) mit einer Fahrzeuganhängekupplung (21), insbesondere einer Kugelkopfkupplung, und mit einem Auflaufbremsaktuator (5) und
- eine elektrische Antriebs- und Bremseinheit (36) mit einer Steuerung (37) zum elektrischen Antreiben und elektrischen Bremsen des Fahrzeuganhängers (1) sowie
- eine Erfassungseinrichtung (10), die an der Auflaufeinrichtung (4) angeordnet und mit der Steuerung (37) verbunden ist,
- wobei die Erfassungseinrichtung (10) physikalische Bewegungsparameter des Fahrzeuganhängers (1) im Zug- und Gespannbetrieb, zumindest Weg und Kraft, aufnimmt und elektrische Signale an die Steuerung (37) übermittelt,
- wobei die Erfassungseinrichtung (10) einen Wegmesser und einen Kraftmesser aufweist,
- wobei die Steuerung (37) in Abhängigkeit von den Signalen der Erfassungseinrichtung (10) die elektrische Antriebs- und Bremseinheit (36) ansteuert und deren Leistungsabgabe regelt, wobei
- die elektrische Antriebs- und Bremseinrichtung (9) eine mit der Steuerung (37) verbundene und getrennt von der Auflaufeinrichtung (4) anordenbare Detektionseinrichtung (11) zur Detektion von weiteren physikalischen Bewegungsparametern des Fahrzeuganhängers (1) im Zug- und Gespannbetrieb aufweist,
- wobei die Steuerung (37) auch in Abhängigkeit von den Signalen der Detektionseinrichtung (11) die elektrische Antriebs- und Bremseinheit (36) ansteuert und deren Leistungsabgabe regelt,
- und wobei die Fahrzeuganhängekupplung (21) beweglich, insbesondere linear in und gegen die Zugrichtung beweglich, an der Auflaufeinrichtung (4) angeordnet ist, wobei die Auflaufeinrichtung (4) mindestens ein mit der Fahrzeuganhängekupplung (21) gekoppeltes und beim Auflaufen sowie ggf. beim Anzugbeschleunigen mitbewegtes Teil (24) aufweist,
- wobei die Erfassungseinrichtung (10) dem beim Auflaufen und ggf. beim Anzugbeschleunigen bewegten Teil (24) der Auflaufeinrichtung (4) zugeordnet ist, welches als ein an der Fahrzeuganhängekupplung (21) befestigtes Schlepporgan (25) ausgebildet ist, wobei der Kraftmesser (48) an dem Schlepporgan (25) der Auflaufeinrichtung (4) angeordnet ist.

2. Elektrische Antriebs- und Bremseinrichtung nach Anspruch 1, **dadurch gekennzeichnet, dass** die Erfassungseinrichtung (10) und/oder die Detektionseinrichtung (11) eine Relativbeschleunigung zwischen dem Zugfahrzeug (2) und dem Fahrzeuganhänger (1) und/oder einen Abstand zwischen dem Zugfahrzeug (2) und dem Fahrzeuganhänger (1) misst, insbesondere optisch.

3. Elektrische Antriebs- und Bremseinrichtung nach Anspruch 1 oder 2, **dadurch**
**gekennzeichnet, dass** ein Kraftmesser (48) zwischen einem Anschlagelement (28) des Schlepporgans (25) und einem stationären Teil der Auflaufeinrichtung (4), insbesondere einem Lager (31) des Schlepporgans (25), angeordnet ist.

4. Elektrische Antriebs- und Bremseinrichtung nach Anspruch 3, **dadurch gekennzeichnet, dass** der Kraftmesser (48) einen verformbaren Messring (50) mit mehreren kraftaufnehmenden Sensoren (51) aufweist, der an oder auf der Zugstange oder dem Zugrohrs (26) angeordnet ist.

5. Elektrische Antriebs- und Bremseinrichtung nach Anspruch 1, 2, 3 oder 4, **dadurch**
**gekennzeichnet, dass** der Wegmesser (47) an einem Auflaufbremsaktuator (5) angeordnet ist.

6. Elektrische Antriebs- und Bremseinrichtung nach einem der vorhergehenden Ansprüche, **dadurch gekennzeichnet, dass** die elektrische Antriebs- und Bremseinheit (36) einen wiederaufladbaren elektrischen Energiespeicher (35), mindesten einen elektrischen Motor/Generator (40,41) und eine Rekuperationsbremse (42) aufweist.

7. Elektrische Antriebs- und Bremseinrichtung nach Anspruch 6, **dadurch gekennzeichnet, dass** die elektrische Antriebs- und Bremseinheit (36) ein dem elektrischen Motor/Generator (40,41) vorgeschaltetes Getriebe (43) und ggf. eine dem elektrischen Motor/Generator (40,41) vorgeschaltete Kupplung (64) aufweist.

8. Elektrische Antriebs- und Bremseinrichtung nach einem der vorhergehenden Ansprüche, **dadurch gekennzeichnet, dass** die elektrische Antriebs- und Bremseinrichtung (9) eine Fahrzeugachse (17) mit Fahrzeugrädern (18), Radbremsen (19) und einem Bremskraftübertrager (20) aufweist.

9. Elektrische Antriebs- und Bremseinrichtung nach einem der vorhergehenden Ansprüche, **dadurch gekennzeichnet, dass** die Steuerung (37) die Leistungsabgabe der elektrischen Antriebs- und Bremseinheit (36) im Auflaufbetrieb und bei vorhandener Auflaufbewegung der Auflaufeinrichtung (4) derart regelt, dass das elektrische Bremsen im Spielbereich der Betriebsbremse (6) und der Auflaufeinrichtung (4) vor und unter Vermeidung von einem Bremseingriff der Betriebsbremse (6) erfolgt.

10. Elektrische Antriebs- und Bremseinrichtung nach einem der vorhergehenden Ansprüche, **dadurch gekennzeichnet, dass** die Steuerung (37) die Leistungsabgabe der elektrischen Antriebs- und Bremseinheit (36) derart regelt, dass eine vorgegebene und von der Erfassungseinrichtung (10) detektierte Zuglast an der Auflaufeinrichtung (4) anliegt.

11. Auflaufgebremster Fahrzeuganhänger, insbesondere Kraftfahrzeuganhänger, Tretradanhänger oder dgl., mit einer Auflaufeinrichtung (4), einer Fahrzeuganhängekupplung (21), insbesondere Kugelkopfkupplung, und einer Betriebsbremse (6) sowie ggf. einer Feststellbremse (7), **dadurch gekennzeichnet, dass** der Fahrzeuganhänger (1) eine elektrische Antriebs- und Bremseinrichtung (9) aufweist, die nach mindestens einem der Ansprüche 1 bis 10 ausgebildet ist.

## Claims

1. Electric drive and braking device for a vehicle trailer (1) which can be coupled to a tractor vehicle (2) and can be subjected to overrun braking, **characterized in that** the electric drive and braking device (9) has
- an overrun device (4) which is designed to operate a service brake (6) of the vehicle trailer (1) and has a vehicle trailer coupling (21), in particular a ball-type coupling, and an overrun brake actuator (5), and
- an electric drive and braking unit (36) with a controller (37) for electrically driving and electrically braking the vehicle trailer (1) and
- a sensing device (10) which is arranged on the overrun device (4) and is connected to the controller (37),
- wherein the sensing device (10) picks up physical movement parameters of the vehicle trailer (1), at least travel and force, during towing and traction operation and transmits electric signals to the controller (37),
- wherein the sensing device (10) has a travel measuring device and a force measuring device,
- wherein the controller (37) drives the electric drive and braking unit (36) and controls its power output depending on the signals from the sensing device (10), wherein
- the electric drive and braking device (9) has a detection device (11), which is connected to the controller (37) and can be arranged separately from the overrun device (4), for detecting further physical movement parameters of the vehicle trailer (1) during towing and traction operation,
- wherein the controller (37) also drives the electric drive and braking unit (36) and controls its power output depending on the signals from the detection device (11),
- and wherein the vehicle trailer coupling (21) is arranged on the overrun device (4) in a movable manner, in particular in a manner movable linearly in and against the traction direction, wherein the overrun device (4) has at least one part (24) which is coupled to the vehicle trailer coupling (21) and moves with it during overrun and possibly during advancing acceleration,
- wherein the sensing device (10) is associated with the part (24) of the overrun device (4) which is moved during overrun and possibly during advancing acceleration and is designed as a towing member (25) which is fastened to the vehicle trailer coupling (21), wherein the force measuring device (48) is arranged on the towing member (25) of the overrun device (4).

2. Electric drive and braking device according to Claim 1, **characterized in that** the sensing device (10) and/or the detection device (11) measures, in particular optically, a relative acceleration between the tractor vehicle (2) and the vehicle trailer (1) and/or a distance between the tractor vehicle (2) and the vehicle trailer (1).

3. Electric drive and braking device according to Claim 1 or 2, **characterized in that** a force measuring device (48) is arranged between a stop element (28) of the towing member (25) and a stationary part of the overrun device (4), in particular a bearing (31) of the towing member (25).

4. Electric drive and braking device according to Claim 3, **characterized in that** the force measuring device (48) has a deformable measuring ring (50) which has a plurality of force-absorbing sensors (51) and is arranged at or on the drawbar or the tow bar (26).

5. Electric drive and braking device according to Claim 1, 2, 3 or 4, **characterized in that** the travel measuring device (47) is arranged on an overrun braking actuator (5).

6. Electric drive and braking device according to one of the preceding claims, **characterized in that** the electric drive and braking unit (36) has a rechargeable electric energy storage device (35), at least one electric motor/generator (40, 41) and a regenerative brake (42).

7. Electric drive and braking device according to Claim 6, **characterized in that** the electric drive and braking unit (36) has a transmission (43) which is connected upstream of the electric motor/generator (40, 41) and possibly a clutch (64) connected upstream of the electric motor/generator (40, 41).

8. Electric drive and braking device according to one of the preceding claims, **characterized in that** the electric drive and braking device (9) has a vehicle axle (17) with vehicle wheels (18), wheel brakes (19) and a braking force transmitter (20).

9. Electric drive and braking device according to one of the preceding claims, **characterized in that** the controller (37) controls the power output of the electric drive and braking unit (36) during overrun operation and when an overrun movement of the overrun device (4) is present in such a way that the electric braking is performed in the region of play of the service brake (6) and the overrun device (4) before and avoiding braking intervention by the service brake (6).

10. Electric drive and braking device according to one of the preceding claims, **characterized in that** the controller (37) controls the power output of the electric drive and braking unit (36) in such a way that a specified traction load which is detected by the sensing device (10) is applied to the overrun device (4).

11. Vehicle trailer, in particular motor vehicle trailer, pedal bike trailer or the like, which is subject to overrun braking and has an overrun device (4), a vehicle trailer coupling (21), in particular ball-type coupling, and a service brake (6) and possibly a parking brake (7), **characterized in that** the vehicle trailer (1) has an electric drive and braking device (9) which is designed according to at least one of Claims 1 to 10.

## Revendications

1. Dispositif d'entraînement et de freinage électrique destiné à une remorque de véhicule (1) pouvant être accouplée à un véhicule tracteur (2) et pouvant freiner par inertie, **caractérisé en ce que** le dispositif d'entraînement et de freinage électrique (9) comporte
- un dispositif à inertie (4) qui est conçu pour actionner un frein de service (6) de la remorque de véhicule (1) et qui comporte un attelage de remorque de véhicule (21), en particulier un attelage à tête sphérique, et qui est muni d'un actionneur de frein à inertie (5) et
- une unité d'entraînement et de freinage électrique (36) pourvue d'une commande (37) destinée à entraîner électriquement et freiner électriquement la remorque de véhicule (1) et
- un dispositif d'acquisition (10) qui est disposé sur le dispositif à inertie (4) et qui est relié à la commande (37),
- le dispositif d'acquisition (10) recevant des paramètres de déplacement physiques de la remorque de véhicule (1) en fonctionnement en traction et en tandem, au moins le déplacement et la puissance, et transmettant des signaux électriques à la commande (37),
- le dispositif d'acquisition (10) comportant un odomètre et un dynamomètre,
- la commande (37) commandant l'unité d'entraînement et de freinage électrique (36) et régulant la puissance de sortie de celle-ci en fonction des signaux du dispositif d'acquisition (10), et
- le dispositif d'entraînement et de freinage électrique (9) comportant un dispositif de détection (11) qui est relié à la commande (37) et peut être disposé séparément du dispositif à inertie (4) et qui est destiné détecter d'autres paramètres de mouvement physiques de la remorque de véhicule (1) en fonctionnement en traction et en tandem,
- la commande (37) commandant l'unité d'entraînement et de freinage électrique (36), et régulant la puissance de sortie de celle-ci, également en fonction des signaux du dispositif de détection (11),
- l'attelage de remorque de véhicule (21) étant disposé sur le dispositif à inertie (4) de manière à être mobile, notamment linéairement dans le sens de traction et dans le sens opposé, le dispositif à inertie (4) comportant au moins une partie (24) qui est attelée à l'attelage de remorque de véhicule (21) et qui se déplace avec lui lors d'un mouvement par inertie et, le cas échéant, lors de l'accélération,
- le dispositif d'acquisition (10) étant associé à la partie (24) du dispositif à inertie (4) qui se déplace lors du mouvement d'inertie et éventuellement lors de l'accélération, laquelle partie est conçue sous la forme d'un organe de remorquage (25) fixé à l'attelage de remorque de véhicule (21), le dynamomètre (48) étant disposé sur l'organe de remorquage (25) du dispositif à inertie (4).

2. Dispositif d'entraînement et de freinage électrique selon la revendication 1, **caractérisé en ce que** le dispositif d'acquisition (10) et/ou le dispositif de détection (11) mesure, notamment de manière optique, une accélération relative entre le véhicule tracteur (2) et la remorque de véhicule (1) et/ou une distance entre le véhicule tracteur (2) et la remorque de véhicule (1).

3. Dispositif d'entraînement et de freinage électrique selon la revendication 1 ou 2, **caractérisé en ce qu'**un dynamomètre (48) est disposé entre un élément de butée (28) de l'organe de remorquage (25) et une partie fixe du dispositif à inertie (4), notamment un palier (31) de l'organe de remorquage (25).

4. Dispositif d'entraînement et de freinage électrique selon la revendication 3, **caractérisé en ce que** le dynamomètre (48) comporte un anneau de mesure déformable (50) pourvu d'une pluralité de capteurs enregistreurs d'effort (51) qui est disposé contre ou sur la barre de traction ou le tube de traction (26).

5. Dispositif d'entraînement et de freinage électrique selon la revendication 1, 2, 3 ou 4, **caractérisé en ce que** l'odomètre (47) est disposé sur un actionneur de freinage à inertie (5).

6. Dispositif d'entraînement et de freinage électrique selon l'une des revendications précédentes, **caractérisé en ce que** l'unité d'entraînement et de freinage électrique (36) comporte un accumulateur d'énergie électrique rechargeable (35), au moins un moteur/générateur électrique (40, 41) et un frein de récupération (42).

7. Dispositif d'entraînement et de freinage électrique selon la revendication 6, **caractérisé en ce que** l'unité d'entraînement et de freinage électrique (36) comporte une transmission (43) montée en amont du moteur/générateur électrique (40, 41) et éventuellement un embrayage (64) monté en amont du moteur/générateur électrique (40, 41).

8. Dispositif d'entraînement et de freinage électrique selon l'une des revendications précédentes, **caractérisé en ce que** le dispositif d'entraînement et de freinage électrique (9) comporte un essieu de véhicule (17) pourvu de roues de véhicule (18), de freins de roue (19) et d'un transmetteur de force de freinage (20).

9. Dispositif d'entraînement et de freinage électrique selon l'une des revendications précédentes, **caractérisé en ce que** la commande (37) régule la puissance de sortie de l'unité d'entraînement et de freinage électrique (36) en fonctionnement par inertie et lors d'un mouvement par inertie du dispositif à inertie (4) de manière à effectuer le freinage électrique dans la zone de jeu du frein de service (6) et du dispositif à inertie (4) avant l'intervention de freinage du frein de service (6) et en évitant celle-ci.

10. Dispositif d'entraînement et de freinage électrique selon l'une des revendications précédentes, **caractérisé en ce que** la commande (37) régule la puissance de sortie de l'unité d'entraînement et de freinage électrique (36) de manière à ce qu'une charge de traction spécifiée détectée par le dispositif d'acquisition (10) est appliquée sur le dispositif à inertie (4).

11. Remorque de véhicule à freins à inertie, en particulier remorque de véhicule automobile, remorque de vélo à pédales ou similaire, comprenant un dispositif à inertie (4), un attelage de remorque de véhicule (21), en particulier un attelage à tête sphérique, et un frein de service (6) et éventuellement un frein de stationnement (7), **caractérisée en ce que** la remorque de véhicule (1) comporte un dispositif d'entraînement et de freinage électrique (9) qui est conçu selon l'une au moins des revendications 1 à 10.
